(19) Europäisches Patentamt / European Patent Office / Office européen des brevets

(11) **EP 3 561 766 A1**

(12) **EUROPEAN PATENT APPLICATION**
published in accordance with Art. 153(4) EPC

(43) Date of publication:
**30.10.2019 Bulletin 2019/44**

(21) Application number: **17883566.6**

(22) Date of filing: **07.12.2017**

(51) Int Cl.:
*G06T 7/00* (2017.01)          *G01N 21/64* (2006.01)
*G02B 21/36* (2006.01)          *G06T 7/66* (2017.01)

(86) International application number:
**PCT/JP2017/044021**

(87) International publication number:
**WO 2018/116851 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **21.12.2016 JP 2016248127**

(71) Applicant: **Nikon Corporation**
**Tokyo 108-6290 (JP)**

(72) Inventors:
• **KOIKE, Tetsuya**
  **Tokyo 108-6290 (JP)**
• **SASAKI, Yutaka**
  **Tokyo 108-6290 (JP)**
• **TOMOSUGI, Wataru**
  **Tokyo 108-6290 (JP)**
• **OTANI, Naoya**
  **Tokyo 108-6290 (JP)**

(74) Representative: **Viering, Jentschura & Partner mbB**
**Patent- und Rechtsanwälte**
**Grillparzerstraße 14**
**81675 München (DE)**

(54) **INFORMATION PROCESSING DEVICE, IMAGE PROCESSING DEVICE, MICROSCOPE, INFORMATION PROCESSING METHOD, AND INFORMATION PROCESSING PROGRAM**

(57)     [Problem] To reduce load of a process of calculating a feature quantity of an image of fluorescence.

[Means to Solve Problem] An information processing device comprises a machine learner that, in a neural network having an input layer to which data representing an image of fluorescence is input and an output layer that outputs a feature quantity of the image of fluorescence, calculates a coupling coefficient between the input layer and the output layer, using an output value that is output from the output layer when input value teacher data is input to the input layer, and feature quantity teacher data.

FIG. 2

EP 3 561 766 A1

**Description**

Technical Field

The present invention relates to an information processing device, an image processing device, a microscope, an information processing method, and an information processing program.

Background Art

There has been known a microscope that uses a single-molecule localization microscopy method such as STORM and PALM (see, for example, Patent Literature 1). In this microscope, a sample is irradiated with activation light to activate a fluorescent substance in a low-density spatial distribution, and thereafter excitation light is irradiated to cause the fluorescent substance to emit light to thereby acquire a fluorescent image. In the fluorescent image acquired in this manner, images of fluorescence are spatially arranged at low density and separated individually, and therefore, the position of the centroid of each image can be found. For calculation of the position of the centroid, for example, a method is used in which an Elliptical Gaussian Function is assumed as a point spread function and a non-linear least-squares method is applied. By repeating the step of obtaining an image of fluorescence several times, for example, several hundreds or more, several thousands or more, or several tens of thousands of times, and performing image processing for arranging the luminescent point at the position of the centroid of the plurality of fluorescent images included in the plurality of obtained images of fluorescence, it is possible to obtain a high resolution sample image.

Citation List

Patent Literature

[Patent Literature 1] U.S. Patent Application Publication No. 2008/0032414

Summary of Invention

According to a first aspect of the present invention, there is provided an information processing device comprising a machine learner that performs machine learning by a neural network having an input layer to which data representing an image of fluorescence is input, and an output layer that outputs a feature quantity of the image of fluorescence, wherein a coupling coefficient between the input layer and the output layer is calculated on the basis of an output value that is output from the output layer when input value teacher data is input to the input layer, and feature quantity teacher data. According to the aspect of the present invention, there is provided the information processing device comprising a machine learner that, in a neural network having an input layer to which data representing an image of fluorescence is input and an output layer that outputs a feature quantity of an image of fluorescence, calculates a coupling coefficient between the input layer and the output layer, using an output value that is output from the output layer when input value teacher data is input to the input layer, and feature quantity teacher data.

According to a second aspect of the present invention, there is provided an image processing device that calculates a feature quantity from an image obtained by image-capturing a sample containing a fluorescent substance, by a neural network using a calculation result of the machine learner output from the information processing device according the first aspect.

According to a third aspect of the present invention, there is provided a microscope comprising: an image capturing device that image-captures a sample containing a fluorescent substance; and the image processing device according to the second aspect that calculates a feature quantity of an image of fluorescence in an image that is image-captured by the image capturing device.

According to a fourth aspect of the present invention, there is provided a microscope comprising: the information processing device of the first aspect; an image capturing device that image-captures a sample containing a fluorescent substance; and an image processing device that calculates a feature quantity of an image of fluorescence in an image image-captured by the image capturing device, using a neural network to which the calculation result of the machine learner output from the information processing device is applied.

According to a fifth aspect of the present invention, there is provided an information processing method comprising calculating a coupling coefficient, using the information processing device of the first aspect. According to the aspect of the present invention, there is provided the information processing method comprising calculating, in a neural network having an input layer to which data representing an image of fluorescence is input and an output layer that outputs a feature quantity of an image of fluorescence, a coupling coefficient between the input layer and the output layer, using an output value that is output from the output layer when input value teacher data is input to the input layer, and feature quantity teacher data.

According to a sixth aspect of the present invention, there is provided an information processing program that causes a computer to cause a machine learner that performs machine learning by a neural network having an input layer to which data representing an image of fluorescence is input, and an output layer that outputs a feature quantity of the image of fluorescence, to perform a process of calculating a coupling coefficient between the input layer and the output layer, using an output value that is output from the output layer when input value teacher data is input to the input layer, and feature quantity teacher data. According to the aspect of the present invention, there is provided the information processing program that executes a process of calculating, in a neural network having an input layer to which data representing an image of fluorescence is input and an output layer that outputs a feature quantity of an image of fluorescence, a coupling coefficient between the input layer and the output layer, using an output value that is output from the output layer when input value teacher data is input to the input layer, and feature quantity teacher data.

Brief Description of the Drawings

Fig. 1 is a conceptual diagram showing a microscope according to a first embodiment.
Fig. 2 is a block diagram showing the microscope according to the first embodiment.
Fig. 3 is a diagram showing a microscope main body according to the first embodiment.
Fig. 4 is a conceptual diagram showing a process of an image processing device according to the first embodiment.
Fig. 5 is a conceptual diagram showing a process of an information processing device according to the first embodiment.
Fig. 6 is a flowchart showing an information processing method according to the first embodiment.
Fig. 7 is a flowchart showing an image processing method according to the first embodiment.
Fig. 8 is a block diagram showing a microscope according to a second embodiment.
Fig. 9 is a conceptual diagram showing a process of a teacher data generator according to the second embodiment.
Fig. 10 is a flowchart showing an information processing method according to the second embodiment.
Fig. 11 is a block diagram showing a microscope according to a third embodiment.
Fig. 12 is a flowchart showing an information processing method according to the third embodiment.
Fig. 13 is a block diagram showing a microscope according to a fourth embodiment.
Fig. 14 is a flowchart showing an information processing method according to the fourth embodiment.
Fig. 15 is a conceptual diagram showing a process of a teacher data generator of an information processing device according to a fifth embodiment.
Fig. 16 is a flowchart showing an information processing method according to the fifth embodiment.
Fig. 17 is a conceptual diagram showing a microscope and an information processing device according to a sixth embodiment.

Description of Embodiments

[First Embodiment]

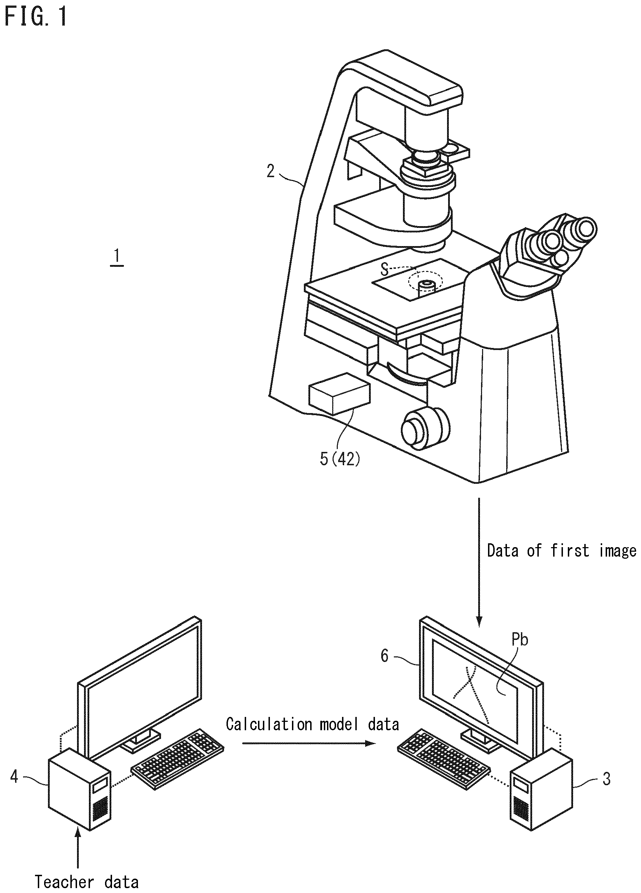

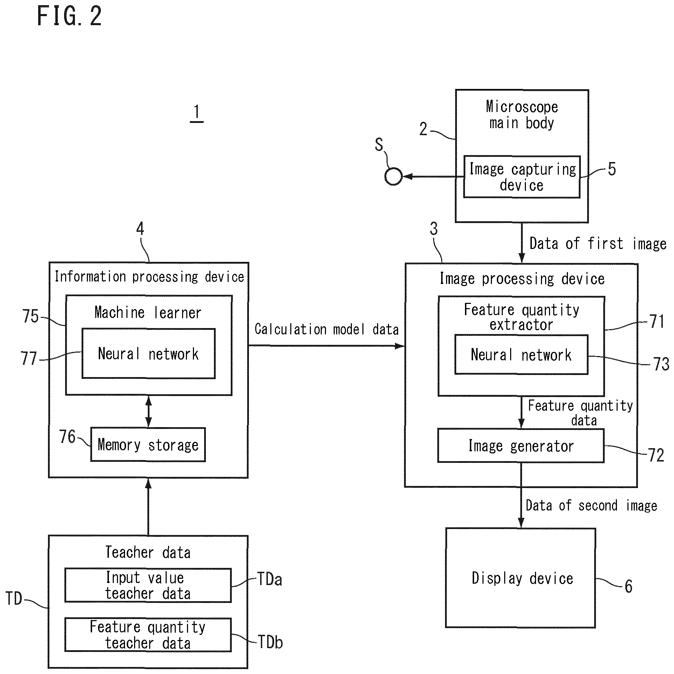

Hereunder, a first embodiment will be described. Fig. 1 is a conceptual diagram showing a microscope according to the present embodiment. Fig. 2 is a block diagram showing the microscope according to the present embodiment. A microscope 1 according to the embodiment is, for example, a microscope that uses a single-molecule localization microscopy method such as STORM and PALM. The microscope 1 is used for fluorescence observation of a sample S labeled with a fluorescent substance. One type of fluorescent substance may be used, or two or more types may be used. In the present embodiment, it is assumed that one type of fluorescent substance (for example, a reporter dye) is used for labeling. The microscope 1 can generate a two-dimensional super-resolution image and a three-dimensional super-resolution image, respectively. For example, the microscope 1 has a mode for generating a two-dimensional super-resolution image and a mode for generating a three-dimensional super-resolution image, and can switch between the two modes.

The sample S may contain live cells or cells that are fixed using a tissue fixative solution such as formaldehyde solution, or may contain tissues or the like. The fluorescent substance may be a fluorescent dye such as cyanine dye, or a fluorescent protein. The fluorescent dye includes a reporter dye that emits fluorescence upon receiving excitation light in a state of being activated (hereinafter, referred to as activated state). The fluorescent dye may contain an activator dye that brings the reporter dye into the activated state upon receiving activating light. When the fluorescent dye does not contain an activator dye, the reporter dye is brought into the activated state upon receiving the activation light. Examples of the fluorescent dye include a dye pair in which two types of cyanine dyes are bound (such as Cy3-Cy5 dye pair (Cy3, Cy5 are registered trademarks), Cy2-Cy5 dye pair (Cy2, Cy5 are registered trademarks), and Cy3-Alexa Fluor 647 dye pair (Cy3, Alexa Fluor are registered trademarks)), and a type of dye (such as, Alexa Fluor 647 (Alexa Fluor is a registered trademark)). Examples of the fluorescent protein include PA-GFP and Dronpa.

The microscope 1 (the microscope system) includes a microscope main body 2, an image processing device 3 (image processor), and an information processing device 4 (information processor). The microscope main body 2 includes an image capturing device 5 that image-captures a sample S containing a fluorescent substance. The image capturing device 5 image-captures an image of fluorescence emitted from the fluorescent substance contained in the sample S. The microscope main body 2 outputs data of a first image obtained by image-capturing the image of fluorescence. The image processing device 3 calculates a feature quantity of the image of fluorescence in the image that is image-captured by the image capturing device 5. The image processing device 3 (see Fig. 2) uses the data of the first image output from the microscope main body 2 to calculate the feature quantity mentioned above by a neural network.

Prior to the feature quantity calculation to be performed by the image processing device 3, the information processing device 4 (see Fig. 2) calculates calculation model data indicating settings of the neural network used by the image processing device 3 to calculate the feature quantity. The calculation model data includes, for example, the number of layers in the neural network, the number of neurons (nodes) included in each layer, and the coupling coefficient (coupling load) between the neurons. The image processing device 3 uses the calculation result of the information processing device 4 (calculation model data) to set a neural network in the own device and calculates the above feature quantity using the neural network that has been set.

The image processing device 3 calculates, for example, the cenroid (the centroid of the luminance) of the image of fluorescence as a feature quantity, and uses the calculated centroid to generate a second image Pb. For example, the image processing device 3 generates (constructs) a super-resolution image (for example, an image based on STORM) as the second image Pb, by arranging the luminescent point at the position of the calculated centroid. The image processing device 3 is connected to a display device 6 such as a liquid crystal display, for example, and causes the display device 6 to display the generated second image Pb.

The image processing device 3 may generate the second image Pb by a single-molecule localization microscopy method other than STORM (for example, PALM). Further, the image processing device 3 may be a device that executes single particle tracking (a single particle analysis method), or may be a device that executes deconvolution of an image. Further, the image processing device 3 need not generate the second image Pb, and may be, for example, a device that outputs a feature quantity calculated using the data of the first image as numerical data.

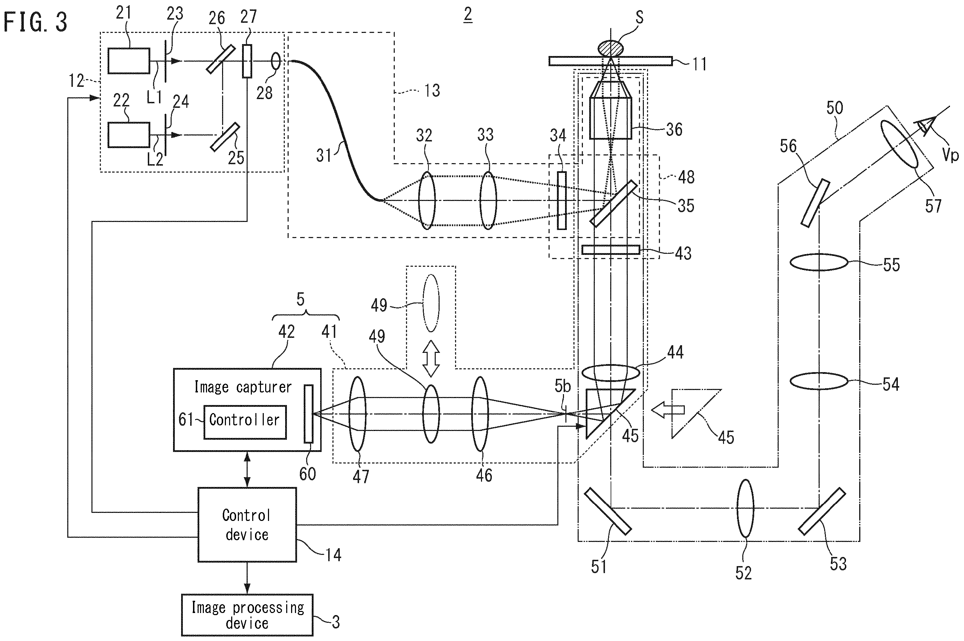

Hereinafter, each part of the microscope 1 will be described. Fig. 3 is a diagram showing the microscope main body according to the present embodiment. The microscope main body 2 includes a stage 11, a light source device 12, an illumination optical system 13, the image capturing device 5, and a control device 14.

The stage 11 holds the sample S to be observed. The stage 11 can, for example, have the sample S placed on an upper surface thereof. The stage 11 may have, for example, a mechanism for moving the sample S as seen with an XY stage or may not have a mechanism for moving the sample S as seen with a desk or the like. The microscope main body 2 need not include the stage 11.

The light source device 12 includes an activation light source 21, an excitation light source 22, a shutter 23, and a shutter 24. The activation light source 21 emits activation light L1 that activates a part of the fluorescent substance contained in the sample S. Here, the fluorescent substance contains a reporter dye and contains no activator dye. The reporter dye of the fluorescent substance is brought into the activated state capable of emitting fluorescence, by irradiating the activation light L1 thereon. The fluorescent substance may contain a reporter dye and an activator dye, and in such a case the activator dye activates the reporter dye upon receiving the activation light L1.

The excitation light source 22 emits excitation light L2 that excites at least a part of the activated fluorescent substance in the sample S. The fluorescent substance emits fluorescence or is inactivated when the excitation light L2 is irradiated thereon in the activated state. When the fluorescent substance is irradiated with the activation light L1 in the inactive state (hereinafter, referred to as inactivated state), the fluorescent substance is activated again.

The activation light source 21 and the excitation light source 22 include, for example, a solid-state light source such as a laser light source, and respectively emit laser light of a wavelength corresponding to the type of fluorescent substance. The emission wavelength of the activation light source 21 and the emission wavelength of the excitation light source 22 are selected, for example, from approximately 405 nm, approximately 457 nm, approximately 488 nm, approximately 532 nm, approximately 561 nm, approximately 640 nm, and approximately 647 nm. Here, it is assumed that the emission wavelength of the activation light source 21 is approximately 405 nm and the emission wavelength of the excitation light source 22 is a wavelength selected from approximately 488 nm, approximately 561 nm, and approximately 647 nm.

The shutter 23 is controlled by the control device 14 and is capable of switching between a state of allowing the activation light L1 from the activation light source 21 to pass therethrough and a state of blocking the activation light L1. The shutter 24 is controlled by the control device 14 and is capable of switching between a state of allowing the excitation light L2 from the excitation light source 22 to pass therethrough and a state of blocking the excitation light L2.

The light source device 12 further includes a mirror 25, a dichroic mirror 26, an acousto-optic element 27, and a lens 28. The mirror 25 is provided, for example, on an emission side of the excitation light source 22. The excitation light L2 from the excitation light source 22 is reflected on the mirror 25 and is incident on the dichroic mirror 26. The dichroic mirror 26 is provided, for example, on an emission side of the activation light source 21. The dichroic mirror 26 has a characteristic of transmitting the activation light L1 therethrough and reflecting the excitation light L2 thereon. The activation light L1 transmitted through the dichroic mirror 26 and the excitation light L2 reflected on the dichroic mirror 26 enter the acousto-optic element 27 through the same optical path.

The acousto-optic element 27 is, for example, an acousto-optic filter. The acousto-optic element 27 is controlled by the control device 14 and can adjust the light intensity of the activation light L1 and the light intensity of the excitation light L2 respectively. Also, the acousto-optic element 27 is controlled by the control device 14 and is capable of switching between a state of allowing the activation light L1 and the excitation light L2 to pass therethrough respectively (hereunder, referred to as light-transmitting state) and a state of blocking or reducing the intensity of the activation light L1 and the excitation light L2 respectively (hereunder, referred to as light-blocking state). For example, when the fluorescent substance contains a reporter dye and contains no activator dye, the control device 14 controls the acousto-optic element 27 so that the activation light L1 and the excitation light L2 are simultaneously irradiated. When the fluorescent substance contains the reporter dye and contains no activator dye, the control device 14 controls the acousto-optic element 27 so that the excitation light L2 is irradiated after the irradiation of the activation light L1, for example. The lens 28 is, for example, a coupler, and focuses the activation light L1 and the excitation light L2 from the acousto-optic element 27 onto a light guide 31.

The microscope main body 2 need not include at least a part of the light source device 12. For example, the light source device 12 may be unitized and may be provided exchangeably (in an attachable and detachable manner) on the microscope main body 2. For example, the light source device 12 may be attached to the microscope main body 2 at the time of observation performed by the microscope main body 2.

The illumination optical system 13 irradiates the activation light L1 that activates a part of the fluorescent substance contained in the sample S and the excitation light L2 that excites at least a part of the activated fluorescent substance. The illumination optical system 13 irradiates the sample S with the activation light L1 and the excitation light L2 from the light source device 12. The illumination optical system 13 includes the light guide 31, a lens 32, a lens 33, a filter 34, a dichroic mirror 35, and an objective lens 36.

The light guide 31 is, for example, an optical fiber, and guides the activation light L1 and the excitation light L2 to the lens 32. In Fig. 3 and so forth, the optical path from the emission end of the light guide 31 to the sample S is shown with a dotted line. The lens 32 is, for example, a collimator, and converts the activation light L1 and the excitation light L2 into parallel lights. The lens 33 focuses, for example, the activation light L1 and the excitation light L2 on a pupil plane of the objective lens 36. The filter 34 has a characteristic, for example, of transmitting the activation light L1 and the excitation light L2 and blocking at least a part of lights of other wavelengths. The dichroic mirror 35 has a characteristic of reflecting the activation light L1 and the excitation light L2 thereon and transmitting light of a predetermined wavelength (for example, fluorescence) among the light from the sample S. The light from the filter 34 is reflected on the dichroic mirror 35 and enters the objective lens 36. The sample S is placed on a front side focal plane of the objective lens 36 at the time of observation.

The activation light L1 and the excitation light L2 are irradiated onto the sample S by the illumination optical system 13 as described above. The illumination optical system 13 mentioned above is an example, and changes may be made thereto where appropriate. For example, a part of the illumination optical system 13 mentioned above may be omitted. The illumination optical system 13 may include at least a part of the light source device 12. Moreover, the illumination optical system 13 may also include an aperture diaphragm, an illumination field diaphragm, and so forth.

The image capturing device 5 includes a first observation optical system 41 and an image capturer 42. The first observation optical system 41 forms an image of fluorescence from the sample S. The first observation optical system 41 includes the objective lens 36, the dichroic mirror 35, a filter 43, a lens 44, an optical path switcher 45, a lens 46, and a lens 47. The first observation optical system 41 shares the objective lens 36 and the dichroic mirror 35 with the illumination optical system 13. In Fig. 3, the optical path between the sample S and the image capturer 42 is shown with a solid line. The fluorescence from the sample S travels through the objective lens 36 and the dichroic mirror 35 and enters the filter 43.

The filter 43 has a characteristic of selectively allowing light of a predetermined wavelength among the light from the sample S to pass therethrough. The filter 43 blocks, for example, illumination light, external light, stray light and the like reflected on the sample S. The filter 43 is, for example, unitized with the filter 34 and the dichroic mirror 35 to form a filter unit 48. The filter unit 48 is provided exchangeably (in a manner that allows it to be inserted in and removed from the optical path). For example, the filter unit 48 may be exchanged according to the wavelength of the light emitted from the light source device 12 (for example, the wavelength of the activation light L1, the wavelength of the excitation light L2), and the wavelength of the fluorescence emitted from the sample S. The filter unit 48 may be a filter unit that corresponds to a plurality of excitation wavelengths and fluorescence wavelengths, and need not be replaced in such a case.

The light having passed through the filter 43 enters the optical path switcher 45 via the lens 44. The light leaving the lens 44 forms an intermediate image on an intermediate image plane 5b after having passed through the optical path switcher 45. The optical path switcher 45 is, for example, a prism, and is provided in a manner that allows it to be inserted in and removed from the optical path of the first observation optical system 41. The optical path switcher 45 is inserted into the optical path of the first observation optical system 41 and retracted from the optical path of the first observation optical system 41 by a driver (not shown in the drawings) that is controlled by the control device 14. The optical path switcher 45 guides the fluorescence from the sample S to the optical path toward the image capturer 42 by internal reflection, in a state of having been inserted into the optical path of the first observation optical system 41.

The lens 46 converts the fluorescence leaving from the intermediate image (the fluorescence having passed through the intermediate image plane 5b) into parallel light, and the lens 47 focuses the light having passed through the lens 46. The first observation optical system 41 includes an astigmatic optical system (for example, a cylindrical lens 49). The cylindrical lens 49 acts at least on a part of the fluorescence from the sample S to generate astigmatism for at least a part of the fluorescence. That is to say, the astigmatic optical system such as the cylindrical lens 49 generates astigmatism with respect at least to a part of the fluorescence to generate an astigmatic difference. This astigmatism is used, for example, to calculate the position of the fluorescent substance in a depth direction of the sample S (an optical axis direction of the objective lens 36) in the mode for generating a three-dimensional super-resolution image. The cylindrical lens 49 is provided in a manner that allows it to be inserted in and detached from the optical path between the sample S and the image capturer 42 (for example, an image-capturing element 60). For example, the cylindrical lens 49 can be inserted into the optical path between the lens 46 and the lens 47 and can be retracted from the optical path. The cylindrical lens 49 is arranged in the optical path in the mode for generating a three-dimensional super-resolution image, and is retracted from the optical path in the mode for generating a two-dimensional super-resolution image.

In the present embodiment, the microscope main body 2 includes a second observation optical system 50. The second observation optical system 50 is used to set an observation range and so forth. The second observation optical system 50 includes, in an order toward a view point Vp of the observer from the sample S, the objective lens 36, the dichroic mirror 35, the filter 43, the lens 44, a mirror 51, a lens 52, a mirror 53, a lens 54, a lens 55, a mirror 56, and a lens 57. The second observation optical system 50 shares the configuration from the objective lens 36 to the lens 44 with the first observation optical system 41.

After having passed through the lens 44, the fluorescence from the sample S is incident on the mirror 51 in a state where the optical path switcher 45 is retracted from the optical path of the first observation optical system 41. The light reflected on the mirror 51 is incident on the mirror 53 via the lens 52, and after having been reflected on the mirror 53, the light is incident on the mirror 56 via the lens 54 and the lens 55. The light reflected on the mirror 56 enters the view point Vp via the lens 57. The second observation optical system 50 forms an intermediate image of the sample S in the optical path between the lens 55 and the lens 57 for example. The lens 57 is, for example, an eyepiece lens, and the observer can set an observation range by observing the intermediate image therethrough.

The image capturer 42 image-captures an image formed by the first observation optical system 41. The image capturer 42 includes the image-capturing element 60 and a controller 61. The image-capturing element 60 is, for example, a CMOS image sensor, but may also be a CCD image sensor or the like. The image-capturing element 60 has, for example, a plurality of two-dimensionally arranged pixels, and is of a structure in which a photoelectric conversion element such as photodiode is arranged in each of the pixels. For example, the image-capturing element 60 reads out the electrical charges accumulated in the photoelectric conversion element by a readout circuit. The image-capturing element 60 converts the read electrical charges into digital data, and outputs digital format data in which the pixel positions and the gradation values are associated with each other (for example, image data). The controller 61 causes the image-capturing element 60 to operate on the basis of a control signal input from the control device 14, and outputs data of the captured image to the control device 14. Also, the controller 61 outputs to the control device 14 an electrical charge accumulation duration and an electrical charge readout duration.

The control device 14 collectively controls respective parts of the microscope main body 2. On the basis of a signal indicating the electrical charge accumulation duration and the electrical charge readout duration supplied from the controller 61 of the image capturer 42, the control device 14 supplies to the acousto-optic element 27 a control signal for switching between the light-transmitting state where the light from the light source device 12 is allowed to pass through and the light-blocking state where the light from the light source device 12 is blocked. The acousto-optic element 27 switches between the light-transmitting state and the light-blocking state on the basis of this control signal. The control device 14 controls the acousto-optic element 27 to control the duration during which the sample S is irradiated with the activation light L1 and the duration during which the sample S is not irradiated with the activation light L1. Also, the control device 14 controls the acousto-optic element 27 to control the duration during which the sample S is irradiated with the excitation light L2 and the duration during which the sample S is not irradiated with the excitation light L2. The control device 14 controls the acousto-optic element 27 to control the light intensity of the activation light L1 and the light intensity of the excitation light L2 that are irradiated onto the sample S. In place of the control device 14, the controller 61 of the image capturer 42 may supply to the acousto-optic element 27 the control signal for switching between the light-transmitting state and the light-blocking state to thereby control the acousto-optic element 27.

The control device 14 controls the image capturer 42 to cause the image-capturing element 60 to execute image capturing. The control device 14 acquires an image-capturing result (first image data) from the image capturer 42. The control device 14 is connected to the image processing device 3, for example, in a wired or wireless manner so as to be able to communicate therewith and supplies data of the first image to the image processing device 3.

Returning to the description of Fig. 2, the image processing device 3 includes a feature quantity extractor 71 and an image generator 72. The feature quantity extractor 71 calculates a feature quantity from the first image obtained by image-capturing the sample containing the fluorescent substance, by a neural network 73. The feature quantity extractor 71 uses the data of the first image to calculate the centroid of the image of fluorescence as the feature quantity. The feature quantity extractor 71 outputs the feature quantity data indicating the calculated centroid. The image generator 72 generates a second image using the feature quantity data output from the feature quantity extractor 71. The image processing device 3 outputs the data of the second image generated by the image generator 72 to the display device 6, and causes the display device 6 to display the second image Pb (see Fig. 1) .

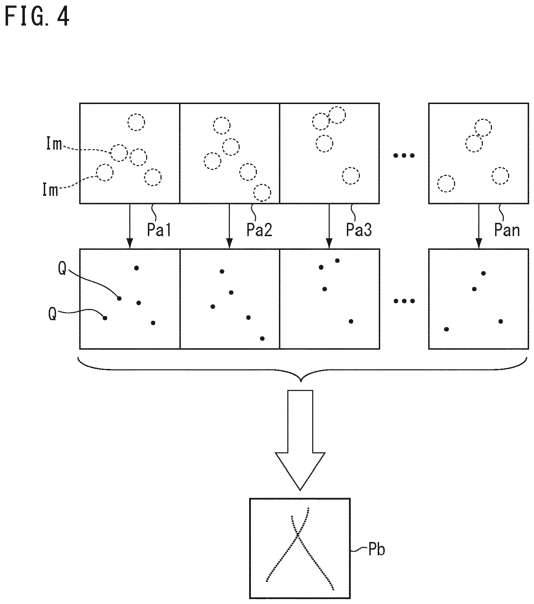

Fig. 4 is a conceptual diagram showing a process of the image processing device according to the present embodiment. The image capturing device 5 of the microscope main body 2 shown in Fig. 3 repeatedly image-captures the sample S to acquire a plurality of first images Pa1 to Pan. Each of the plurality of first images Pa1 to Pan includes an image Im of fluorescence. The feature quantity extractor 71 calculates the position of the centroid Q (feature quantity) for each of the plurality of first images Pa1 to Pan. the image generator 72 generates the second image Pb, using the centroid Q calculated for at least some of the plurality of first images Pa1 to Pan. For example, the image generator 72 generates the second image Pb by arranging the luminescent point at the position of each of the plurality of centroids Q obtained from the plurality of images of fluorescence.

Returning to the description of Fig. 2, the information processing device 4 includes a machine learner 75 and a memory storage 76. The machine learner 75 performs learning of a neural network 77 using teacher data TD that is input externally. The teacher data TD includes input value teacher data TDa with respect to the neural network 77 and feature quantity teacher data TDb. The input value teacher data TDa is, for example, a luminance distribution representing an image of fluorescence (for example, an image). The feature quantity teacher data TDb is, for example, the centroid of the image of the fluorescence represented in the input value teacher data TDa. The information of feature quantity may include information other than centroid. The number of types of feature quantity information may be one, or two or more. For example, the information of feature quantity may include data of the centroid and data of the reliability (accuracy) of the data.

The machine learner 75 generates calculation model data indicating the result of learning of the neural network 77. The machine learner 75 stores the generated calculation model data in the memory storage 76. The information processing device 4 outputs the calculation model data stored in the memory storage 76 to the outside thereof, and the calculation model data is supplied to the image processing device 3. The information processing device 4 may supply the calculation model data to the image processing device 3 by wired or wireless communication. The information processing device 4 may output the calculation model data to a memory storage medium such as a USB memory and a DVD, and the image processing device 3 may receive the calculation model data via the memory storage medium.

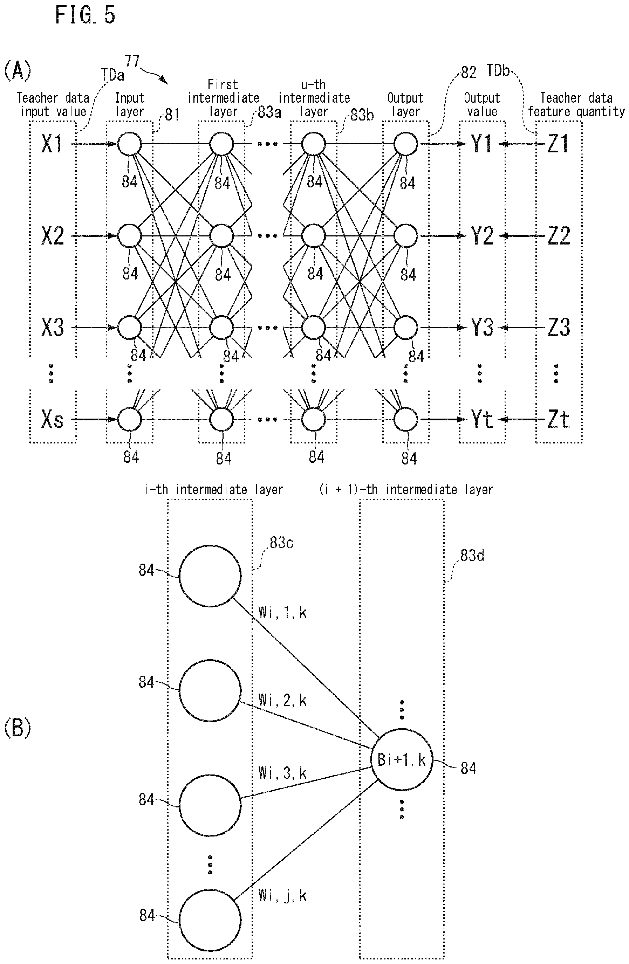

Fig. 5 is a conceptual diagram showing a process of the information processing device according to the present embodiment. Fig. 5 conceptually shows the neural network 77 of Fig. 2. The neural network 77 has an input layer 81 and an output layer 82. The input layer 81 is a layer to which an input value is input. Each of X1, X2, X3, ..., Xs is input value teacher data input to the input layer. "s" is a subscript assigned to the input value. "s" is a natural number that corresponds to the number of elements included in one set of input value teacher data. The output layer 82 is a layer to which data propagated through the neural network 77 is output. Each of Y1, Y2, Y3, ..., Yt is an output value. "t" is a subscript assigned to the output value. t is a natural number that corresponds to the number of elements included in one set of output values. Each of Z1, Z2, Z3, ..., Zt is feature quantity (output value) teacher data. "t" corresponds to the number of elements included in one set of feature quantity teacher data, and is the same number (natural number) as the number of the output value elements.

The neural network 77 of Fig. 5 has one or more intermediate layers (first intermediate layer 83a, ..., u-th intermediate layer 83b), and the machine learner 75 performs deep learning. "u" is a subscript indicating the number of intermediate layers and is a natural number.

Each layer of the neural network 77 has one or more neurons 84. The number of the neurons 84 that belong to the input layer 81 is the same as the number of input value teacher data (s). The number of the neurons 84 that belong to each intermediate layer (for example, the first intermediate layer 83a) is set arbitrarily. The number of the neurons that belong to the output layer 82 is the same as the number of output values (t). The neurons 84 that belong to one layer (for example, the input layer 81) are respectively associated with the neurons 84 that belong to the adjacent layer (for example, the first intermediate layer 83a).

Fig. 5 (B) is a diagram showing a part of the neural network 77 in an enlarged manner. Fig. 5 (B) representatively shows the relationship between the plurality of neurons 84 that belong to the i-th intermediate layer 83c and one neuron 84 that belongs to the (i + 1)-th intermediate layer 83d. "i" is a subscript indicating the order of the intermediate layers from the input layer 81 side serving as a reference, and is a natural number. "j" is a subscript assigned to a neuron that belongs to the i-th intermediate layer 83c and is a natural number. "k" is a subscript assigned to a neuron that belongs to the (i + 1)-th intermediate layer 83d and is a natural number.

The plurality of neurons 84 that belong to the i-th intermediate layer are respectively associated with the neurons 84 that belong to the (i + 1)-th intermediate layer 83d. Each neuron 84 outputs, for example, "0" or "1" to the associated neuron 84 on the output layer 82 side. $W_{i, 1, k}$, $W_{i, 2, k}$, $W_{i, 1, k}$, $W_{i, 3, k}$, ..., $W_{i, j, k}$ are coupling coefficients, and correspond to weighting coefficients for the outputs from the respective neurons 84. The data input to the neuron 84 that belongs to the (i + 1)-th intermediate layer 83d is a value obtained by summing, by the number of the plurality of neurons 84 that belong to the i-th intermediate layer 83c, the product of the output of each of the plurality of neurons 84 that belong to the i-th intermediate layer 83c and the coupling coefficient.

A bias $B_{i + 1, k}$ is set to the neuron 84 that belongs to the (i + 1)-th intermediate layer 83d. The bias is, for example, a threshold value that influences the output to a downstream side layer. The influence of the bias on the downstream side layer differs, depending on the selection of the activation function. In one configuration, the bias is a threshold value used to determine as to which one of "0" and "1" is output to the downstream side layer, with respect to an input from the upstream side layer. For example, when the input from the i-th intermediate layer 83c exceeds the bias $B_{i + 1, k}$, the neuron 84 that belongs to the (i + 1)-th intermediate layer 83d outputs "1" to each neuron in the downstream side adjacent layer. When the input from the i-th intermediate layer 83c is less than or equal to the bias $B_{i + 1, k}$, the neuron 84 that belongs to the (i + 1)-th intermediate layer 83d outputs "0" to each neuron in the downstream side adjacent layer. The bias is a value, in one configuration, to be added to the sum value obtained by summing the product of the output of each neuron of the upstream side layer and the coupling coefficient within this layer. In such a case, the output value for the downstream side layer is a value obtained by applying the activation function to a value obtained by adding the bias to the above sum value.

The machine learner 75 of the information processing device 4 of Fig. 2 inputs the input value teacher data TDa (X1, X2, X3, ..., Xs) to the input layer 81 of the neural network 77. The machine learner 75 causes the data to propagate from the input layer 81 to the output layer 82 in the neural network 77, and obtains output values (Y1, Y2, Y3, ..., Yt) from the output layer 82. The machine learner 75 calculates the coupling coefficient between the input layer 81 and the output layer 82, using the output values (Y1, Y2, Y3, ..., Yt) that are output from the output layer 82 when the input value teacher data TDa is input to the input layer 81, and the feature quantity teacher data TDb. For example, the machine learner 75 adjusts the coupling coefficient so as to reduce the difference between the output values (Y1, Y2, Y3, ..., Yt) and the feature quantity teacher data (Z1, Z2, Z3, ..., Zt).

Also, the machine learner 75 calculates a bias to be assigned to the neurons of the intermediate layer, using the output values (Y1, Y2, Y3, ..., Yt) that are output from the output layer 82 when the input value teacher data TDa is input to the input layer 81, and the feature quantity teacher data TDb. For example, the machine learner 75 adjusts the coupling coefficient and the bias so that the difference between the output values (Y1, Y2, Y3, ..., Yt) and the feature quantity teacher data (Z1, Z2, Z3, ..., Zt) is made less than a set value by backpropagation.

The number of intermediate layers is arbitrarily set, and is selected, for example, from a range between 1 or more and 10 or less. For example, the number of intermediate layers is selected by testing the state of convergence (for example, the learning time, the residual value between the output value and the feature quantity teacher data) while changing the number of intermediate layers, so that a desired state of convergence is obtained. Having a structure with three or more layers including the input layer 81, the output layer 82, and one or more intermediate layers as seen in the neural network 77, a hierarchical network is guaranteed to enable identification of an arbitrary pattern. Therefore, the neural network 77 is highly versatile and convenient when one or more intermediate layers are provided, but the intermediate layers may be omitted.

As a result of machine learning, the machine learner 75 generates calculation model data including the adjusted coupling coefficient and bias. For example, the calculation model data includes, for example, the number of layers in the neural network 77 of Fig. 5, the number of neurons that belong to each layer, and the coupling coefficient, and the bias. The machine learner 75 stores the generated calculation model data in the memory storage 76. The calculation model data is read out from the memory storage 76 and supplied to the image processing device 3.

Prior to the process of extracting a feature quantity, the feature quantity extractor 71 of the image processing device 3 sets the neural network 73 on the basis of the calculation model data supplied from the information processing device 4. The feature quantity extractor 71 sets the number of layers in the neural network 73, the number of neurons, the coupling coefficient, and the bias to the values specified in the calculation model data. The feature quantity extractor 71 thus calculates the feature quantity from the first image obtained by image-capturing the sample S containing the fluorescent substance, by the neural network 73 using the calculation result (calculation model data) of the machine learner 75.

In a single-molecule localization microscopy method such as STORM and PALM, in order to calculate the centroid of an image of fluorescence, there is generally used a method in which the luminance distribution of the image of fluorescence is fitted to a predetermined functional form (such as a point spread function), and the centroid is found by the function obtained from the fitting. In order to fit the luminance distribution of the image of fluorescence to a predetermined functional form, for example, a non-linear least squares method such as the Levenberg-Marquardt method is used. Non-linear least squares fitting requires iterative computation and requires a large amount of processing time. For example, in a case where a single super-resolution image is to be generated and there are several tens of thousands of captured images, the process of calculating the centroid of a plurality of images of fluorescence included in several tens of thousands of images, requires a processing time ranging from several tens of seconds to several minutes.

The image processing device 3 according to the embodiment calculates the feature quantity of the image of fluorescence by the preliminarily set neural network 73, so that it is possible, for example, to reduce or eliminate repetitive computation in the process of calculating the feature quantity, thus resulting in a contribution to a reduction in the processing time.

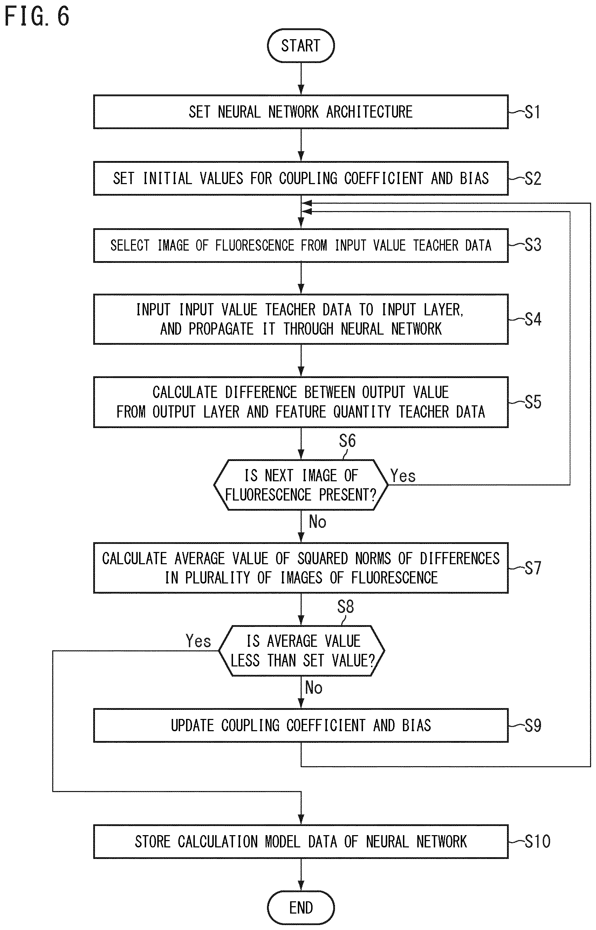

Next, an information processing method and an image processing method according to the embodiment will be described on the basis of the operation of the microscope 1 described above. Fig. 6 is a flowchart showing the information processing method according to the present embodiment. Appropriate reference to Fig. 2 will be made for each part of the microscope 1, and appropriate reference to Fig. 5 will be made for each part of the neural network 77.

In Step S1, the machine learner 75 sets an architecture (structure) of the neural network 77. For example, as the architecture of the neural network 77, the machine learner 75 sets the number of layers included in the neural network 77 and the number of neurons that belong to each layer. For example, the number of layers included in the neural network 77 and the number of neurons that belong to each layer are set to values specified by the operator (the user) for example. In Step S2, the machine learner 75 sets default values of the coupling coefficient and the bias in the neural network 77. For example, the machine learner 75 decides the initial value of the coupling coefficient by a random number, and sets the initial value of the bias to zero.

In Step S3, the machine learner 75 selects an image of fluorescence from the input value teacher data TDa included in the teacher data TD that is input externally. In Step S4, the machine learner 75 inputs the input value teacher data TDa selected in Step S3 into the input layer 81, and causes the data to propagate through the neural network 77. In Step S5, the machine learner 75 calculates the difference between the output values (Y1, Y2, Y3, ..., Yt) from the output layer 82 and the feature quantity teacher data TDb.

In Step S6, the machine learner 75 determines whether or not there is a next image of fluorescence to be used for machine learning. If the processing from Step S3 to Step S5 is not completed for at least one scheduled image of fluorescence, the machine learner 75 determines that there is a next image of fluorescence (Step S6; Yes). If it is determined that there is a next image of fluorescence (Step S6; Yes), the process returns to Step S3 to select the next image of fluorescence, and the machine learner 75 repeats the processing of Step S4 and thereafter.

If the processing from Step S3 to Step S5 is completed for all of the scheduled images of fluorescence, in Step S6, the machine learner 75 determines that there is no next image of fluorescence (Step S6; No). If it is determined that there is no next image of fluorescence (Step S6; No), the machine learner 75, in Step S7, calculates the average of the squared norms of differences in the plurality of images of fluorescence for the difference calculated in Step S5.

In Step S8, the machine learner 75 determines whether or not the average value calculated in Step S7 is less than a set value. The set value is arbitrarily set in accordance with, for example, the accuracy required for calculating the feature quantity by the neural network 73. If it is determined that the average value is not less than the set value (Step S8; No), the machine learner 75 updates the engagement coefficient and the bias by SGD (Stochastic Gradient Descent), for example. The method used for optimizing the engagement coefficient and the bias need not be SGD, and may be Momentum SGD, AdaGrad, AdaDelta, Adam, RMSpropGraves, or NesterovAG. After the processing of Step S9, the machine learner 75 returns to Step S3 and repeats the subsequent processing. If it is determined in Step S8 that the average value is less than the set value (Step S8; Yes), the machine learner 75 stores the calculation model data of the neural network 77 in the memory storage 76 in Step S10.

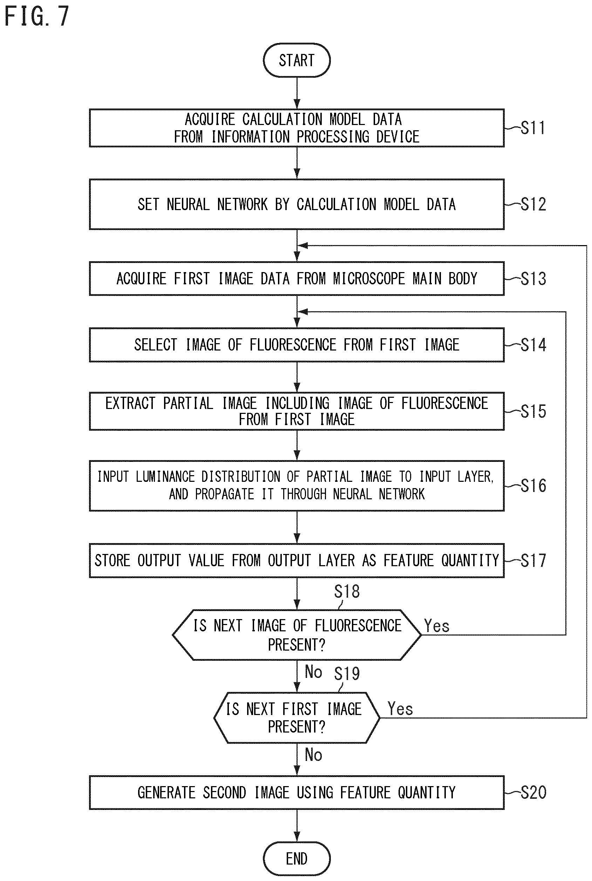

Fig. 7 is a flowchart showing an image processing method according to the present embodiment. In Step S11, the image processing device 3 acquires the calculation model data from the information processing device 4. In Step S12, the feature quantity extractor 71 sets the neural network 73 by the calculation model data acquired in Step S11. Thus, the neural network 73 has a structure equivalent to that of the neural network 77 of Fig. 5. In Step S13, the image processing device 3 acquires data of the first image from the microscope main body 2.

In Step S14, the feature quantity extractor 71 selects an image of fluorescence from the first image on the basis of the data of the first image acquired in Step S13. For example, the feature quantity extractor 71 compares luminance (for example, pixel value) with a threshold value for each partial region of the first image, and determines the region of luminance greater than or equal to the threshold value as including an image of fluorescence. The above threshold value may be, for example, a predetermined fixed value or a variable value such as an average value of the luminance of the first image. The feature quantity extractor 71 selects a process target region from the region that has been determined as including the image of fluorescence. In Step S15, the feature quantity extractor 71 extracts a region (for example, a plurality of pixels, a partial image) including an image of fluorescence from the first image. For example, the feature quantity extractor 71 extracts a luminance distribution in a region of a predetermined area for the image of fluorescence selected in Step S14. For example, for the target region, the feature quantity extractor 71 extracts a pixel value distribution in a pixel group of a predetermined number of pixels.

In Step S16, the feature quantity extractor 71 inputs the luminance distribution of the partial image extracted in Step S14 into the input layer of the neural network 73 set in Step S12, and causes the data to propagate through the neural network 73. In Step S17, the feature quantity extractor 71 stores the output value from the output layer of the neural network 73 as a feature quantity in the memory storage (not shown in the drawings).

In Step S18, the feature quantity extractor 71 determines whether or not there is a next image of fluorescence. If the processing from Step S15 to Step S17 is not completed for at least one scheduled image of fluorescence, the feature quantity extractor 71 determines that there is a next image of fluorescence (Step S18; Yes). If it is determined that there is a next image of fluorescence (Step S18; Yes), the process returns to Step S14 to select the next image of fluorescence, and the feature quantity extractor 71 repeats the processing of Step S15 and thereafter.

If the processing from Step S15 to Step S17 is completed for all of the scheduled images of fluorescence, in Step S18, the feature quantity extractor 71 determines that there is no next image of fluorescence (Step S18; No). If it is determined that there is no next image of fluorescence (Step S18; No), the feature quantity extractor 71 determines whether or not there is a next first image in Step S19. If the processing from Step S14 to Step S17 is not completed for at least one of the plurality of scheduled first images, the feature quantity extractor 71 determines that there is a next first image (Step S19; Yes). If it is determined that there is a next first image (Step S19; Yes), the process returns to Step S13 to acquire the next first image, and the feature quantity extractor 71 repeats the processing thereafter.

If the processing from Step S14 to Step S17 is completed for all of the scheduled first images, the feature quantity extractor 71 determines that there is no next first image (Step S19; No). If the feature quantity extractor 71 determines that there is no next first image (Step S19; No), the image generator 72 uses, in Step S20, the feature quantity calculated by the feature quantity extractor 71 to generate a second image.

In the present embodiment, the information processing device 4 includes, for example, a computer system. The information processing device 4 reads out an information processing program stored in the memory storage 76, and executes various processes in accordance with the information processing program. The information processing program causes a computer to execute a process of calculating, in a neural network having an input layer to which data representing an image of fluorescence is input and an output layer that outputs a feature quantity of an image of fluorescence, a coupling coefficient between the input layer and the output layer, using an output value that is output from the output layer when input value teacher data is input to the input layer, and feature quantity teacher data. The information processing program may be provided in a manner of being recorded in a computer-readable memory storage medium.

[Second Embodiment]

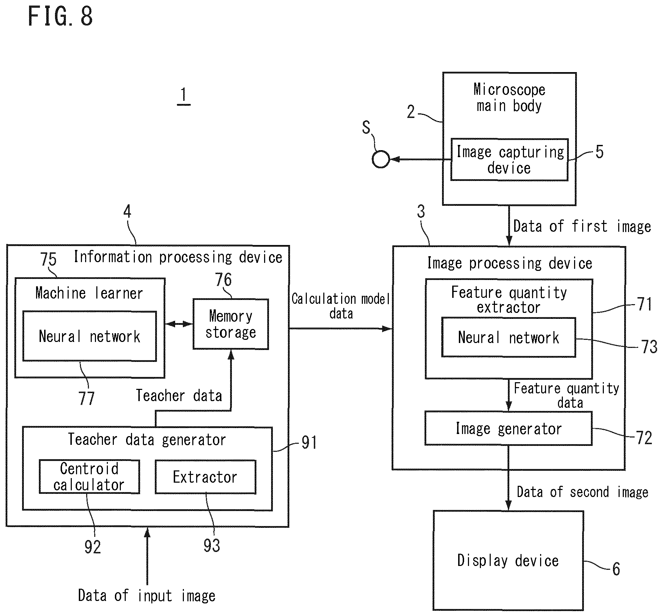

Next, a second embodiment will be described. In the present embodiment, the same reference signs are given to the same configurations as those in the embodiment described above, and the descriptions thereof will be omitted or simplified. Fig. 8 is a block diagram showing a microscope according to the present embodiment. In the present embodiment, the information processing device 4 includes a teacher data generator 91. The teacher data generator 91 generates input value teacher data and feature quantity teacher data, on the basis of a predetermined point spread function. For example, the teacher data generator 91 uses data of an input image that is supplied externally, to generate teacher data. The input image is a sample image including an image of fluorescence. The input image may be, for example, a first image image-captured by the image capturing device 5 of the microscope main body 2 or an image image-captured or generated by another device.

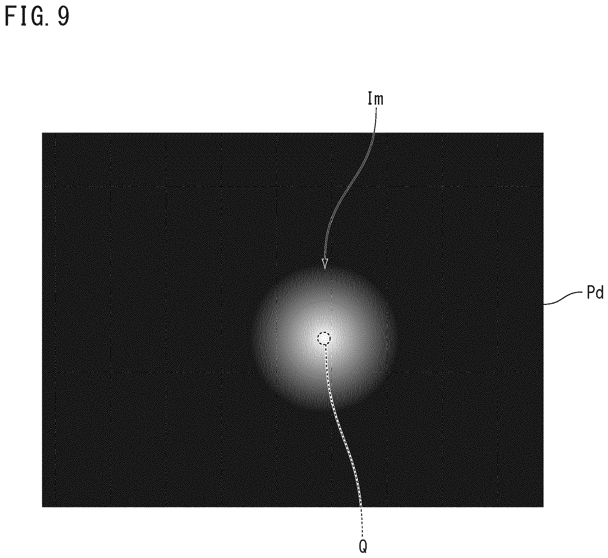

The teacher data generator 91 includes a centroid calculator 92 and an extractor 93. Fig. 9 is a conceptual diagram showing a process of the teacher data generator according to the present embodiment. In Fig. 9, "x" is a direction set in an input image Pd (for example, a horizontal scanning direction), and "y" is a direction perpendicular to "x" (for example, a vertical scanning direction). The centroid calculator 92 calculates the position of a centroid Q of an image Im of fluorescence, using a predetermined point spread function with respect to an input image Pd including the image Im of fluorescence.

The predetermined point spread function is given by, for example, a function of the following Equation (1). In Equation (1), $p_0$ is the x-direction position (x-coordinate) of the centroid of the image Im of fluorescence, and $p_1$ is the y-direction position (y-coordinate) of the centroid of the image Im of fluorescence. $p_2$ is the x-direction width of the image Im of fluorescence, and $p_3$ is the y-direction width of the image Im of fluorescence. $p_4$ is the ratio of the y-direction width of the image Im of fluorescence to the x-direction width of the image Im of fluorescence (the horizontal to vertical ratio). Moreover, $p_5$ is the luminance of the image Im of fluorescence.

[Equation 1]

$$I(x, y, p_0, p_1, p_2, p_3, p_4, p_5) = p_4 \exp\left[-\frac{(x-p_0)^2}{2p_2^2 p_3} - \frac{(y-p_1)^2 p_3}{2p_2^2}\right] + p_5$$

$$\cdots \text{ equation (1)}$$

The centroid calculator 92 fits the luminance distribution of the image Im of fluorescence in the input image to the functional form of Equation (1), and calculates the above parameters (po to $p_5$) by, for example, a non-linear least squares method such as the Levenberg-Marquardt method. The input image Pd in Fig. 9 representatively shows one image Im of fluorescence. However, the input image Pd includes a plurality of images of fluorescence, and the centroid calculator 92 calculates the parameters ($p_0$ to $p_5$) mentioned above for each of the images of fluorescence. The teacher data generator 91 stores the position of the centroid of the image of fluorescence calculated by the centroid calculator 92 ($p_0$, $p_1$) in the memory storage 76 as feature quantity teacher data. The machine learner 75 reads out the position of the centroid calculated by the centroid calculator 92 from the memory storage 76, and uses the position for the feature quantity teacher data.

The extractor 93 extracts, from the input image, a luminance distribution of a region including the centroid calculated by the centroid calculator 92. For example, the extractor 93 compares the luminance (for example, pixel value) with a threshold value for each partial region of the input image, and determines the region of luminance greater than or equal to the threshold value as including an image of fluorescence. The above threshold value may be, for example, a predetermined fixed value or a variable value such as an average value of the luminance of the input images. The extractor 93 extracts a luminance distribution in a region of a predetermined area for the region determined as including an image of fluorescence (hereunder, referred to as target region). For example, for the target region, the extractor 93 extracts a pixel value distribution in a pixel group of a predetermined number of pixels. The centroid calculator 92 calculates, for example, the centroid of the image of fluorescence for each region extracted by the extractor 93. The extractor 93 may extract a region of a predetermined area including the centroid of the image of fluorescence calculated by the centroid calculator 92. The teacher data generator 91 stores the luminance distribution of the region extracted by the extractor 93 in the memory storage 76 as input value teacher data. The machine learner 75 reads out the luminance distribution of the region extracted by the extractor 93 from the memory storage 76, and uses it for the input value teacher data.

The predetermined point spread function is not limited to the example shown in Equation (1). For example, the predetermined point spread function may be given by a function of the following Equation (2). The point spread function of Equation (2) is a function in which the constant term ($p_5$) on the right side of Equation (1) above is omitted.

[Equation 2]

$$I(x, y, p_0, p_1, p_2, p_3, p_4) = p_4 \exp\left[-\frac{(x-p_0)^2}{2p_2^2 p_3} - \frac{(y-p_1)^2 p_3}{2p_2^2}\right]$$

$$\cdots \text{ equation (2)}$$

The predetermined point spread function may be given by a function of the following Equation (3). The point spread function of Equation (3) is a function in which the index part of the first term on the right side of Equation (1) above is given a degree of freedom (for example, a super Gaussian function). The point spread function in Equation (3) includes parameters ($p_6$, $p_7$) in the power index of the first term on the right side. As with Equation (2), the predetermined point spread function may also be a function in which the constant term ($p_5$) on the right side of Equation (3) is omitted.

[Equation 3]

$$I(x, y, p_0, p_1, p_2, p_3, p_4, p_5, p_6, p_7) = p_4 \exp\left[-\frac{(x-p_0)^{p_6}}{2p_2^2 p_3} - \frac{(y-p_1)^{p_7} p_3}{2p_2^2}\right] + p_5$$

$$\cdots \text{ equation (3)}$$

Although the predetermined point spread function is represented by a Gaussian type function in Equation (1) to Equation (3), it may be represented by another functional form. For example, the predetermined point spread function may be given by a function of the following Equation (4). The point spread function of Equation (4) is a Lorentzian type function.
[Equation 4]

$$I(x,y,p_0,p_1,p_2,p_3,p_4) = \frac{p_4}{\frac{1}{p_2^2 p_3}(x-p_0)^2 + \frac{p_3}{p_2^2}(y-p_1)^2 + 1}$$

$$\cdots \text{equation (4)}$$

The predetermined point spread function may also be given by a function of the following Equation (5). The point spread function of Equation (5) is a function in which the constant term ($p_5$) is added to the right side of Equation (4) above.
[Equation 5]

$$I(x,y,p_0,p_1,p_2,p_3,p_4,p_5) = \frac{p_4}{\frac{1}{p_2^2 p_3}(x-p_0)^2 + \frac{p_3}{p_2^2}(y-p_1)^2 + 1} + p_5$$

$$\cdots \text{equation (5)}$$

The predetermined point spread function may also be given by a function of the following Equation (6). The point spread function of Equation (6) is a function in which the index part of the first term on the right side of Equation (5) above is given a degree of freedom. The point spread function in Equation (6) includes a parameter ($p_6$) in the power index of the first term on the right side. As with Equation (4), the predetermined point spread function may also be a function in which the constant term ($p_5$) on the right side of Equation (6) is omitted.
[Equation 6]

$$I(x,y,p_0,p_1,p_2,p_3,p_4,p_5,p_6) = \frac{p_4}{\left[\frac{1}{p_2^2 p_3}(x-p_0)^2 + \frac{p_3}{p_2^2}(y-p_1)^2 + 1\right]^{p_6}} + p_5$$

$$\cdots \text{equation (6)}$$

As with the first embodiment, the information processing device 4 need not include the teacher data generator 91. For example, the teacher data generator 91 may be provided in an external device of the information processing device 4. In such a case, as described in the first embodiment, the information processing device 4 can execute machine learning by the neural network 77, using teacher data that is supplied externally.

Next, an information processing method according to the embodiment will be described on the basis of the operation of the microscope 1 described above. Fig. 7 is a flowchart showing the information processing method according to the present embodiment. Appropriate reference will be made to Fig. 8 for each part of the microscope 1.

In Step S21, the teacher data generator 91 selects an image of fluorescence from an input image. For example, the teacher data generator 91 compares the luminance (for example, pixel value) with a threshold value for each partial region of the input image, and determines the region of luminance greater than or equal to the threshold value as including an image of fluorescence. The teacher data generator 91 selects a process target region from a plurality of regions that have been determined as including the image of fluorescence. In Step S22, the extractor 93 extracts a partial image including the image of fluorescence (luminance distribution).

In Step S23, the centroid calculator 92 calculates the centroid of the image of fluorescence. In Step S24 of Step S23, the centroid calculator 92 fits the luminance distribution extracted by the extractor 93 in Step S22 to a point spread function. In Step S25, the centroid calculator 92 calculates the position ($p_0$, $p_1$) of the centroid from the parameters ($p_0$ to $p_5$) of the function obtained in the fitting operation in Step S24.

In Step S26, the teacher data generator 91 takes the luminance distribution extracted by the extractor 93 in Step S22 as input value teacher data, and the position of the centroid calculated by the centroid calculator 92 in Step S25 as feature quantity teacher data, and stores this set of data in the memory storage 76 as teacher data. In Step S27, the teacher data generator 91 determines whether or not there is a next image of fluorescence to be used for generating teacher data. If the processing from Step S22 to Step S26 is not completed for at least one scheduled image of fluorescence, the teacher data generator 91 determines that there is a next image of fluorescence (Step S27; Yes). If it is determined that there is a next image of fluorescence (Step S17; Yes), the process returns to Step S21 to select the next image of fluorescence, and the teacher data generator 91 repeats the processing of Step S22 and thereafter. If the processing from Step S22 to Step S26 is completed for all of the scheduled images of fluorescence, in Step S27, the teacher data generator 91 determines that there is no next image of fluorescence (Step S27; No).

In the present embodiment, the information processing device 4 includes, for example, a computer system. The information processing device 4 reads out an information processing program stored in the memory storage 76, and executes various processes in accordance with the information processing program. The information processing program causes a computer to execute the process of generating input value teacher data and feature quantity teacher data on the basis of the predetermined point spread function. For example, the information processing program causes the computer to execute one or both of processes of: calculating the centroid of the image of fluorescence, using the predetermined point spread function with respect to the input image including the image of fluorescence; and extracting the luminance distribution of the region including the centroid. The information processing program above may be provided in a manner of being recorded in a computer-readable memory storage medium.

[Third Embodiment]

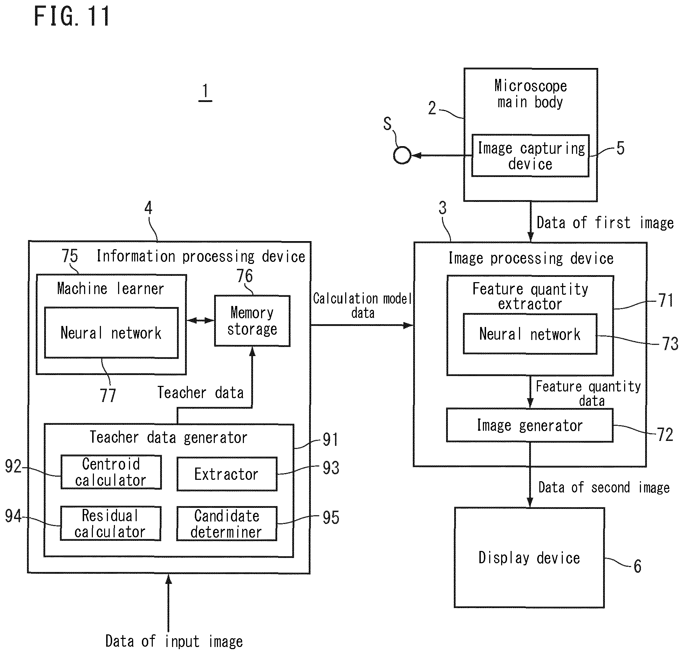

Hereunder, a third embodiment will be described. In the present embodiment, the same reference signs are given to the same configurations as those in the embodiment described above, and the descriptions thereof will be omitted or simplified. Fig. 11 is a block diagram showing a microscope according to the present embodiment. In the present embodiment, the teacher data generator 91 selects an image of fluorescence to be used for generating teacher data, from a plurality of candidates of images of fluorescence. The teacher data generator 91 includes a residual calculator 94 and a candidate determiner 95.

In the teacher data generator 91, as described with reference to Fig. 9, the centroid calculator 92 fits the luminance distribution of the image Im of fluorescence to a predetermined functional form (a point spread function) for the input image Pd including the image Im of fluorescence, to thereby calculate the centroid of the image Im of fluorescence. The residual calculator 94 calculates a residual at the time of fitting the candidate of the image Im of fluorescence included in the input image Pd to the predetermined point spread function. The candidate determiner 95 determines whether or not to use the candidate of the image Im of fluorescence for input value teacher data and feature quantity teacher data, on the basis of the residual calculated by the residual calculator 94. If the residual calculated by the residual calculator 94 is less than a threshold value, the candidate determiner 95 determines to use the candidate of the image of fluorescence corresponding to the residual for feature quantity teacher data. If the residual calculated by the residual calculator 94 is greater than or equal to the threshold value, the candidate determiner 95 determines not to use the candidate of the image of fluorescence corresponding to the residual for feature quantity teacher data.

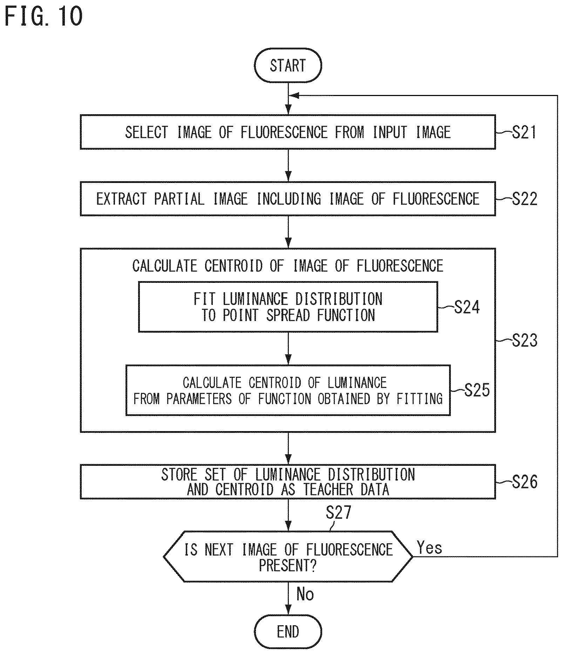

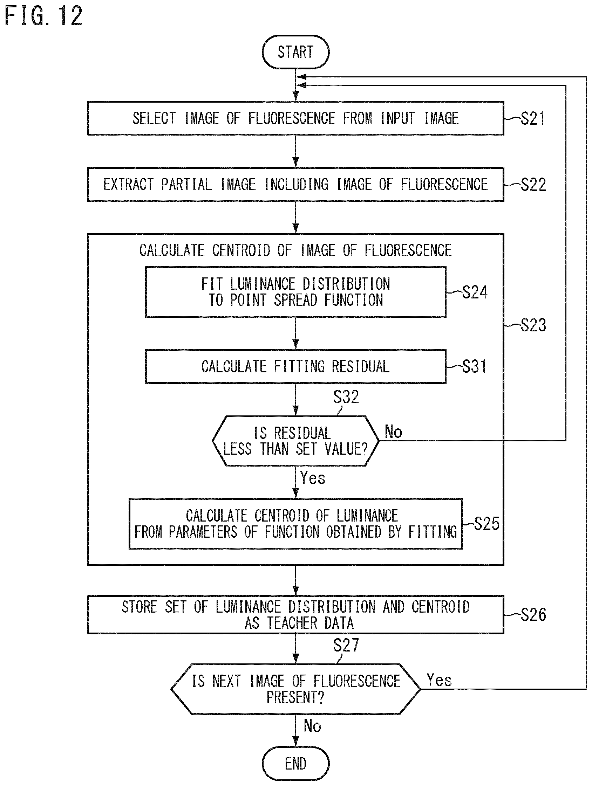

Next, an information processing method according to the embodiment will be described on the basis of the operation of the microscope 1 described above. Fig. 12 is a flowchart showing the information processing method according to the present embodiment. Appropriate reference will be made to Fig. 11 for each part of the microscope 1. The descriptions of the same processes as those in Fig. 10 will be omitted or simplified where appropriate.

The processes from Step S21 to Step S24 are the same as those in Fig. 10, and the descriptions thereof are omitted. In Step S31, the residual calculator 94 calculates a fitting residual in Step S24. For example, the residual calculator 94 compares the function obtained by fitting with the luminance distribution of the image of fluorescence to thereby calculate the residual.

In Step S32, the candidate determiner 95 determines whether or not the residual calculated in Step S31 is less than a set value. If the candidate determiner 95 determines the residual as being less than the set value (Step S32; Yes), the centroid calculator 92 calculates the centroid of the image of fluorescence in Step S25, and in Step S26, the teacher data generator 91 stores the set of the luminance distribution and the centroid in the memory storage 76 as teacher data. If the candidate determiner 95 determines the residual as being greater than or equal to the set value (Step S32; No), the teacher data generator 91 does not use the image of fluorescence for generating teacher data, and returns to Step S21 to repeat the processing thereafter.

The above fitting residual is increased, for example, by noise at or around the position of the image of fluorescence. As for the noise, for example, in the present embodiment, the teacher data generator 91 selects an image of fluorescence to be used for generating teacher data on the basis of the fitting residual, and therefore, influence of the noise and so forth on the result of machine learning is suppressed by reducing the amount of time taken by machine learning.

In the present embodiment, the information processing device 4 includes, for example, a computer system. The information processing device 4 reads out an information processing program stored in the memory storage 76, and executes various processes in accordance with the information processing program. The information processing program causes a computer to execute the processes of: calculating a residual at the time of fitting a candidate of an image of fluorescence included in an input image to a predetermined point spread function; and determining whether or not to use the candidate of the image of fluorescence for input value teacher data and feature quantity teacher data, on the basis of the residual calculated by the residual calculator. The information processing program may be provided in a manner of being recorded in a computer-readable memory storage medium.

[Fourth Embodiment]

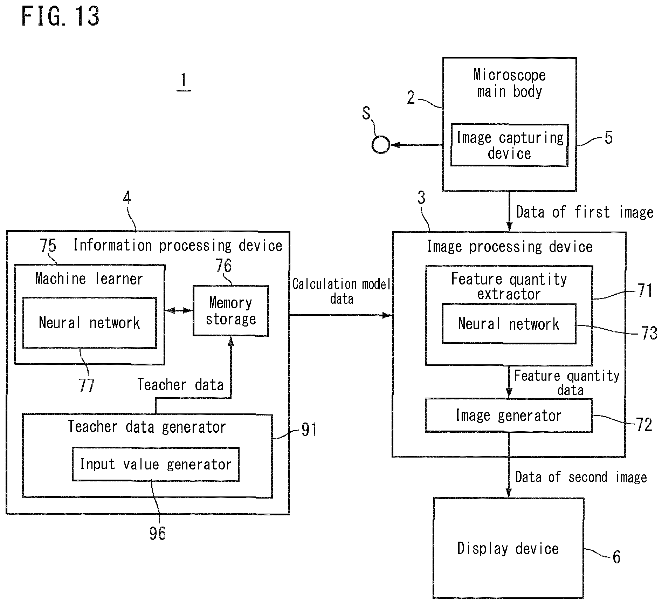

Hereunder, a fourth embodiment will be described. In the present embodiment, the same reference signs are given to the same configurations as those in the embodiment described above, and the descriptions thereof will be omitted or simplified. Fig. 13 is a block diagram showing a microscope according to the present embodiment. In the present embodiment, the teacher data generator 91 includes an input value generator 96. The input value generator 96 generates input value teacher data, using a predetermined point spread function with respect to a specified centroid. For example, the input value generator 96 sets parameters (po to $p_5$) using the specified value of the centroid for the point spread function shown in Equation (1) in Fig. 9 (B), and generates a luminance distribution represented by the point spread function as input value teacher data. The teacher data generator 91 takes the specified centroid as feature quantity teacher data, and the machine learner 75 uses the centroid specified as the feature quantity teacher data.

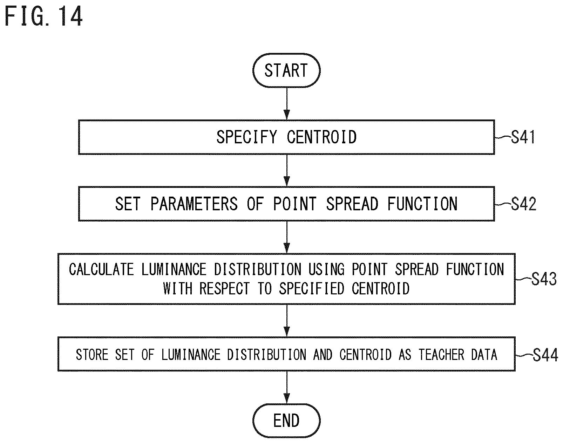

Next, an information processing method according to the embodiment will be described on the basis of the operation of the microscope 1 described above. Fig. 14 is a flowchart showing an information processing method according to the present embodiment. Appropriate reference will be made to Fig. 13 for each part of the microscope 1. In Step S41, the teacher data generator 91 selects a centroid. In Step S42, the teacher data generator 91 sets parameters of the point spread function. For example, in Step S41 and Step S42, the teacher data generator 91 sets parameters ($p_0$ to $p_5$) in Equation (1) of Fig. 9 (B) by random numbers. For example, upper and lower limit values are set for the random numbers mentioned above, and the parameters ($p_0$ to $p_5$) may take arbitrary values within the preliminarily defined range. At least one of the parameters ($p_0$ to $p_5$) need not be determined by a random number, and may, for example, be a value specified by the operator.

In Step S43, the input value generator 96 uses the point spread function set in Step S41 and Step S42 for the specified centroid to calculate a luminance distribution in a region of a predetermined area including the specified centroid. In Step S44, the teacher data generator 91 takes the luminance distribution calculated in Step S44 as input value teacher data, and the centroid specified in Step S41 as feature quantity teacher data, and stores this set of data in the memory storage 76 as teacher data.

In the present embodiment, the information processing device 4 includes, for example, a computer system. The information processing device 4 reads out an information processing program stored in the memory storage 76, and executes various processes in accordance with the information processing program. The information processing program causes a computer to execute the process of generating input value teacher data, using the predetermined point spread function with respect to the specified centroid. The information processing program may be provided in a manner of being recorded in a computer-readable memory storage medium.

[Fifth Embodiment]

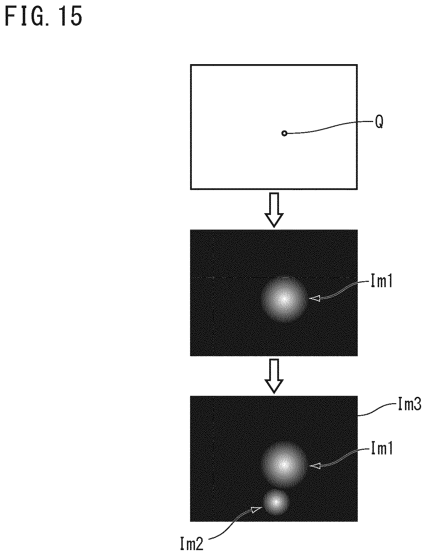

Hereunder, a fifth embodiment will be described. In the present embodiment, the same reference signs are given to the same configurations as those in the embodiment described above, and the descriptions thereof will be omitted or simplified. In the present embodiment, the configuration of the microscope is the same as that of Fig. 13, but the processing performed by the input value generator 96 is different. Fig. 15 is a conceptual diagram showing a process of a teacher data generator of an information processing device according to the present embodiment. The input value generator 96 generates a first luminance distribution Im1 using a predetermined point spread function, for a specified centroid Q. Further, the input value generator 96 generates, as input value teacher data, a luminance distribution Im3 that combines the first luminance distribution Im1 and a second luminance distribution Im2 different from the first luminance distribution Im1.

The second luminance distribution Im2 is, for example, a luminance distribution that represents noise. The noise may, for example, be caused by light from a fluorescence at a depth different from the observation position in the sample S, stray light generated in the optical system, or external light, or may also be caused by electrical noise in the image-capturing element 60. The second luminance distribution Im2 may be, for example, a luminance distribution in which noise included in a first image acquired by the microscope main body 2 is preliminarily analyzed and the noise appearing in the first image is reproduced.

The teacher data generator 91 takes the above luminance distribution Im3 as input value teacher data, and the specified centroid (the centroid of the first luminance distribution Im1) as feature quantity teacher data, and stores the teacher data that takes this set of data in the memory storage 76 (see Fig. 13). The machine learner 75 reads out teacher data TD stored in the memory storage 76 and uses it for machine learning in the neural network 77.

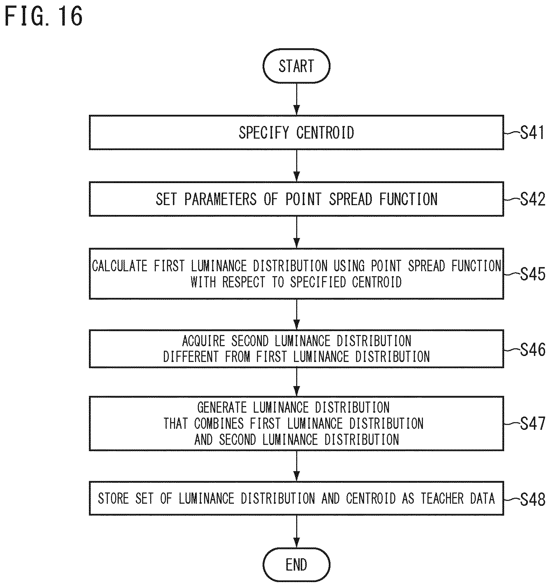

Next, an information processing method according to the embodiment will be described on the basis of the operation of the microscope 1 described above. Fig. 16 is a flowchart showing an information processing method according to the present embodiment. Appropriate reference will be made to Fig. 13 for each part of the microscope 1.

The descriptions of the same processes as those in Fig. 14 will be omitted or simplified where appropriate.

The processes of Step S41 and Step S42 are the same as those in Fig. 14. In Step S45, the input value generator 96 generates the first luminance distribution Im1 using a predetermined point spread function, for the specified centroid Q (see Fig. 15). In Step S46, the input value generator 96 acquires the second luminance distribution Im2 different from the first luminance distribution Im1. For example, in the second luminance distribution Im2, noise included in the first image acquired by the microscope main body 2 has preliminarily been analyzed, information indicating the second luminance distribution Im2 is stored in the memory storage 76. The input value generator 96 reads out the information indicating the second luminance distribution Im2 from the memory storage 76 to thereby acquire the second luminance distribution Im2. The input value generator 96 may generate the second luminance distribution Im2 by setting different parameters different from those of the first luminance distribution Im1 to the point spread function shown in Equation (1) of Fig. 9 (B).

In Step S47, the input value generator 96 generates, as input value teacher data, a luminance distribution Im3 that combines the first luminance distribution Im1 and the second luminance distribution Im2. In Step S48, the teacher data generator 91 takes the luminance distribution Im3 generated in Step S47 as input value teacher data and the centroid specified in Step S41 as feature quantity teacher data, and stores the teacher data that takes this set of data in the memory storage 76.

In the present embodiment, the information processing device 4 includes, for example, a computer system. The information processing device 4 reads out an information processing program stored in the memory storage 76, and executes various processes in accordance with the information processing program. The information processing program causes a computer to execute the process of combining the first luminance distribution generated using the predetermined point spread function for the specified centroid and the second luminance distribution different from the first luminance distribution, to thereby generate input value teacher data. The information processing program may be provided in a manner of being recorded in a computer-readable memory storage medium.

[Sixth Embodiment]

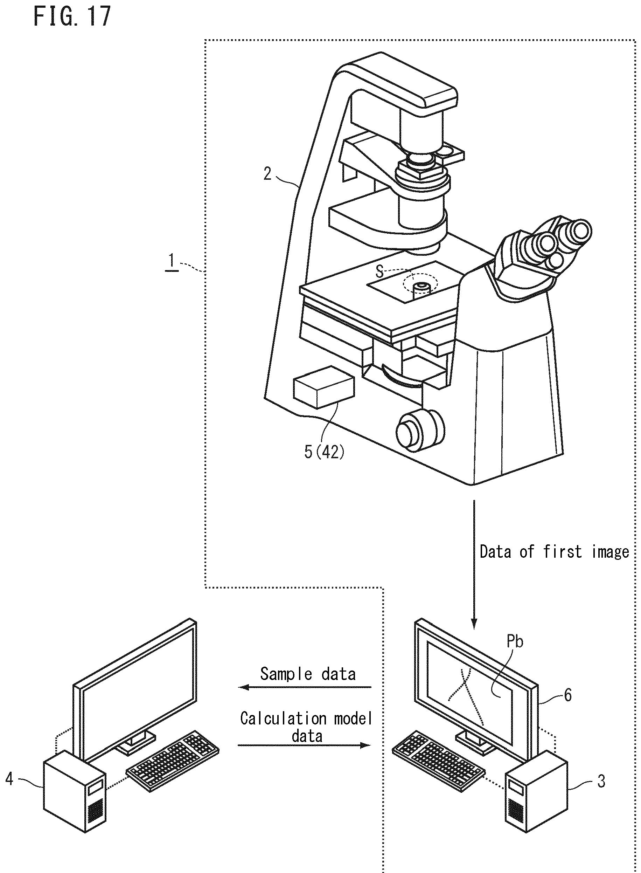

Hereunder, a sixth embodiment will be described. In the present embodiment, the same reference signs are given to the same configurations as those in the embodiment described above, and the descriptions thereof will be omitted or simplified. Fig. 17 is a conceptual diagram showing a microscope and an information processing device according to the present embodiment. In the present embodiment, the microscope 1 includes the microscope main body 2 and the image processing device 3, and does not include the information processing device 4. The information processing device 4 is an external device of the microscope 1 and generates calculation model data. For example, the information processing device 4 receives at least a part of data of a first image image-captured by the microscope main body 2 from the microscope 1 as sample data, by communication or via a memory storage medium.

The information processing device 4 generates teacher data using the sample data as the data of the input image shown in Fig. 8 and the like, and generates calculation model data by machine learning of a neural network. The information processing device 4 supplies the calculation model data to the image processing device 3 by communication or via a memory storage medium. The image processing device 3 processes the data of the first image by the neural network to which the calculation model data from the information processing device 4 is applied (the calculation result of the machine learner 75).

The microscope 1 need not supply the sample data to the information processing device 4, and a device other than the microscope 1 may supply the sample data to the information processing device 4. Also, the information processing device 4 need not receive the supply of the sample data, and may generate teacher data without using the sample data (the input image) as described in Fig. 13 and so forth, for example. The information processing device 4 need not generate teacher data, and may receive teacher data externally as shown in Fig. 2 for generating calculation model data.

According to the above embodiment, for example, there is provided an information processing device comprising a machine learner that: performs machine learning by a neural network having an input layer to which data representing an image of fluorescence is input, and an output layer that outputs a feature quantity of the image of fluorescence; and calculates a coupling coefficient between the input layer and the output layer, using an output value that is output from the output layer when input value teacher data is input to the input layer, and feature quantity teacher data.

According to the above embodiment, for example, there is provided an information processing method comprising a process of calculating, by performing machine learning by a neural network having an input layer to which data representing an image of fluorescence is input and an output layer that outputs a feature quantity of an image of fluorescence, a coupling coefficient between the input layer and the output layer, using an output value that is output from the output layer when input value teacher data is input to the input layer, and feature quantity teacher data.

According to the above embodiment, for example, there is provided an information processing program that causes a computer to execute a process of calculating, by performing machine learning by a neural network having an input layer to which data representing an image of fluorescence is input and an output layer that outputs a feature quantity of an image of fluorescence, a coupling coefficient between the input layer and the output layer, using an output value that is output from the output layer when input value teacher data is input to the input layer, and feature quantity teacher data.

The technical scope of the present invention is not limited to the modes described in the above embodiment and so forth. One or more of the requirements described in the above embodiments and so forth may be omitted. One or more of the requirements described in the above embodiments and so forth may also be combined where appropriate. Furthermore, the contents of Japanese Patent Application No. 2016-248127 and all documents cited in the detailed description of the present invention are incorporated herein by reference to the extent permitted by law.

Description of Reference Signs

| | |
|---|---|
| 1 | Microscope |
| 2 | Microscope main body |
| 3 | Image processing device |
| 4 | Information processing device |
| 5 | Image capturing device |
| 71 | Feature quantity extractor |
| 72 | Image generator |
| 73 | Neural network |
| 75 | Machine learner |
| 76 | Memory storage |
| 77 | Neural network |
| 81 | Input layer |
| 82 | Output layer |
| 83a to 83d | Intermediate layer |
| 84 | Neuron |
| 91 | Teacher data generator |
| 92 | Centroid calculator |
| 93 | Extractor |
| 94 | Residual calculator |
| 95 | Candidate determiner |
| 96 | Input value generator |

**Claims**

1. An information processing device comprising
a machine learner that performs machine learning by a neural network having an input layer to which data representing an image of fluorescence is input, and an output layer that outputs a feature quantity of the image of fluorescence, wherein
a coupling coefficient between the input layer and the output layer is calculated on the basis of an output value that is output from the output layer when input value teacher data is input to the input layer, and feature quantity teacher data.

2. The information processing device according to claim 1, wherein:

   the neural network includes an intermediate layer between the input layer and the output layer; and
   the machine learner calculates a bias to be assigned to a neuron of the intermediate layer, using the output value that is output from the output layer when the input value teacher data is input to the input layer, and the feature quantity teacher data.

3. The information processing device according to claim 1 or 2, the information processing device comprising
a teacher data generator that generates the input value teacher data and the feature quantity teacher data, on the basis of a predetermined point spread function.

4. The information processing device according to claim 1 or 2, wherein:

the teacher data generator includes a centroid calculator that calculates a centroid of the image of fluorescence, using the predetermined point spread function with respect to an input image including the image of fluorescence; and

the machine learner uses the input image for the input value teacher data, and uses the centroid calculated by the centroid calculator for the feature quantity teacher data.

5. The information processing device according to claim 4, the information processing device comprising
an extractor that extracts, from the input image, a luminance distribution of a region including the centroid calculated by the centroid calculator, wherein
the machine learner uses the luminance distribution for the input value teacher data.

6. The information processing device according to claim 4 or 5, wherein
the teacher data generator includes:

a residual calculator that calculates a residual at a time of fitting a candidate of the image of fluorescence included in the input image to the predetermined point spread function; and
a candidate determiner that determines whether or not to use the candidate of the image of fluorescence for the input value teacher data and the feature quantity teacher data, on the basis of the residual calculated by the residual calculator.

7. The information processing device according to claim 4, wherein:

the teacher data generator includes an input value generator that generates the input value teacher data, using the predetermined point spread function with respect to a specified centroid; and
the machine learner uses the specified centroid as the feature quantity teacher data.

8. The information processing device according to claim 7, wherein
the input value generator combines a first luminance distribution generated using the predetermined point spread function with respect to the specified centroid with a second luminance distribution different from the first luminance distribution, to thereby generate the input value teacher data.

9. An image processing device that calculates the feature quantity from an image obtained by image-capturing a sample containing a fluorescent substance, by a neural network using a calculation result of the machine learner output from the information processing device according to any one of claims 1 to 8.

10. A microscope comprising:

an image capturing device that image-captures a sample containing a fluorescent substance; and
the image processing device according to claim 8 that calculates a feature quantity of an image of fluorescence in an image that is image-captured by the image capturing device.

11. A microscope comprising:

the information processing device according to any one of claims 1 to 8;
an image capturing device that image-captures a sample containing a fluorescent substance; and
an image processing device that calculates a feature quantity of an image of fluorescence in an image image-captured by the image capturing device, by the neural network using the calculation result of the machine learner output from the information processing device.

12. The microscope according to claim 10 or 11, wherein:

the fluorescent substance is activated upon receiving activation light, and emits fluorescence upon receiving excitation light in a state of being activated;
the image capturing device repeatedly image-captures the sample to obtain a plurality of first images; and
the image processing device generates a second image, using the feature quantity calculated for at least a part of the plurality of first images.

13. An information processing method comprising

calculating the coupling coefficient, using the information processing device according to any one of claims 1 to 8.

14. An information processing program that causes a computer to
cause a machine learner that performs machine learning by a neural network having an input layer to which data representing an image of fluorescence is input, and an output layer that outputs a feature quantity of the image of fluorescence, to perform a process of calculating a coupling coefficient between the input layer and the output layer, using an output value that is output from the output layer when input value teacher data is input to the input layer, and feature quantity teacher data.

FIG. 1

Data of first image

Calculation model data

Teacher data

FIG. 2

1

Microscope
main body

2

S ○ ← Image capturing
device — 5

3

Data of first image

Image processing device

Feature quantity
extractor — 71

Neural network — 73

Feature quantity
data

Image generator — 72

Data of second image

Display device — 6

4

Information processing device

Machine learner — 75

Neural network — 77

Calculation model data →

76 — Memory storage

Teacher data

Input value
teacher data — TDa

TD —

Feature quantity
teacher data — TDb

FIG. 3

FIG. 4

## FIG. 5

(A)

Teacher data input value / TDa^77 / Input layer / First intermediate layer / u-th intermediate layer / Output layer / Output value / Teacher data feature quantity

81 / 83a / 83b / 82 TDb

$X1$ → ○ ○ ··· ○ ○ → $Y1$ ← $Z1$

84 84 84 84

$X2$ → ○ ○ ··· ○ ○ → $Y2$ ← $Z2$

84 84 84 84

$X3$ → ○ ○ ··· ○ ○ → $Y3$ ← $Z3$

84 84 84 84

⋮ ⋮ ⋮ ⋮ ⋮ ⋮ ⋮

$Xs$ → ○ ○ ··· ○ ○ → $Yt$ ← $Zt$

84 84 84 84

(B)

i-th intermediate layer        (i + 1)-th intermediate layer

83c                                         83d

84 ○ $W_{i,1,k}$

84 ○ $W_{i,2,k}$

                                  ○ $B_{i+1,k}$ 84

84 ○ $W_{i,3,k}$

⋮

84 ○ $W_{i,j,k}$

FIG. 6

START

SET NEURAL NETWORK ARCHITECTURE ——S1

SET INITIAL VALUES FOR COUPLING COEFFICIENT AND BIAS ——S2

SELECT IMAGE OF FLUORESCENCE FROM INPUT VALUE TEACHER DATA ——S3

INPUT INPUT VALUE TEACHER DATA TO INPUT LAYER, AND PROPAGATE IT THROUGH NEURAL NETWORK ——S4

CALCULATE DIFFERENCE BETWEEN OUTPUT VALUE FROM OUTPUT LAYER AND FEATURE QUANTITY TEACHER DATA ——S5

S6
IS NEXT IMAGE OF FLUORESCENCE PRESENT? — Yes

No

CALCULATE AVERAGE VALUE OF SQUARED NORMS OF DIFFERENCES IN PLURALITY OF IMAGES OF FLUORESCENCE ——S7

S8
Yes — IS AVERAGE VALUE LESS THAN SET VALUE?

No

UPDATE COUPLING COEFFICIENT AND BIAS ——S9

STORE CALCULATION MODEL DATA OF NEURAL NETWORK ——S10

END

# FIG. 7

START

ACQUIRE CALCULATION MODEL DATA
FROM INFORMATION PROCESSING DEVICE ── S11

SET NEURAL NETWORK BY CALCULATION MODEL DATA ── S12

ACQUIRE FIRST IMAGE DATA FROM MICROSCOPE MAIN BODY ── S13

SELECT IMAGE OF FLUORESCENCE FROM FIRST IMAGE ── S14

EXTRACT PARTIAL IMAGE INCLUDING IMAGE OF FLUORESCENCE
FROM FIRST IMAGE ── S15

INPUT LUMINANCE DISTRIBUTION OF PARTIAL IMAGE TO INPUT LAYER,
AND PROPAGATE IT THROUGH NEURAL NETWORK ── S16

STORE OUTPUT VALUE FROM OUTPUT LAYER AS FEATURE QUANTITY ── S17

S18
IS NEXT IMAGE OF FLUORESCENCE
PRESENT? ── Yes

No  S19
IS NEXT FIRST IMAGE
PRESENT? ── Yes

No

GENERATE SECOND IMAGE USING FEATURE QUANTITY ── S20

END

FIG. 8

1

Microscope
main body

2

S

Image capturing
device — 5

Data of first image

4

75    Information processing device

Machine learner

Neural network

77

76

Memory
storage

Calculation model
data

Teacher data

Teacher data generator

Centroid
calculator

Extractor

91

92          93

Data of input image

3

Image processing device

Feature quantity
extractor — 71

Neural network — 73

Feature quantity
data

Image generator — 72

Data of second image

Display device — 6

FIG. 9

FIG. 10

```
                          ┌─────────┐
                          │  START  │
                          └─────────┘
                               │
   ┌──────────────────────────────────────────────────────┐
   │    SELECT IMAGE OF FLUORESCENCE FROM INPUT IMAGE      │─S21
   └──────────────────────────────────────────────────────┘
                               │
   ┌──────────────────────────────────────────────────────┐
   │  EXTRACT PARTIAL IMAGE INCLUDING IMAGE OF FLUORESCENCE │─S22
   └──────────────────────────────────────────────────────┘
                               │
   ┌──────────────────────────────────────────────────────┐
   │       CALCULATE CENTROID OF IMAGE OF FLUORESCENCE      │
   │   ┌────────────────────────────────────────┐          │
   │   │      FIT LUMINANCE DISTRIBUTION         │─S24      │
   │   │      TO POINT SPREAD FUNCTION           │          │
   │   └────────────────────────────────────────┘          │─S23
   │                       │                                │
   │   ┌────────────────────────────────────────┐          │
   │   │     CALCULATE CENTROID OF LUMINANCE     │─S25      │
   │   │ FROM PARAMETERS OF FUNCTION OBTAINED BY FITTING │  │
   │   └────────────────────────────────────────┘          │
   └──────────────────────────────────────────────────────┘
                               │
   ┌──────────────────────────────────────────────────────┐
   │       STORE SET OF LUMINANCE DISTRIBUTION             │─S26
   │       AND CENTROID AS TEACHER DATA                    │
   └──────────────────────────────────────────────────────┘
                               │           S27
                      ╱────────────────────╲
                     ╱  IS NEXT IMAGE OF     ╲  Yes
                     ╲  FLUORESCENCE PRESENT? ╱
                      ╲────────────────────╱
                               │ No
                          ┌─────────┐
                          │   END   │
                          └─────────┘
```

FIG. 11

Microscope
main body

2

Image capturing device — 5

S

Data of first image

1

4

Information processing device

75

Machine learner

Neural network

77

76

Memory storage

Calculation model data

Teacher data

Teacher data generator

92 — Centroid calculator

91

Extractor — 93

94 — Residual calculator

Candidate determiner — 95

Data of input image

3

Image processing device

Feature quantity extractor — 71

Neural network — 73

Feature quantity data

Image generator — 72

Data of second image

Display device — 6

# FIG. 12

```
                        ( START )
                           │
                           ▼
  ┌─────────────────────────────────────────────────┐
  │  SELECT IMAGE OF FLUORESCENCE FROM INPUT IMAGE   │──S21
  └─────────────────────────────────────────────────┘
                           │
                           ▼
  ┌─────────────────────────────────────────────────┐
  │ EXTRACT PARTIAL IMAGE INCLUDING IMAGE OF FLUORESCENCE │──S22
  └─────────────────────────────────────────────────┘
                           │
                           ▼
  ┌─────────────────────────────────────────────────┐
  │      CALCULATE CENTROID OF IMAGE OF FLUORESCENCE │
  │   ┌──────────────────────────────────────┐      │
  │   │        FIT LUMINANCE DISTRIBUTION     │──S24 │
  │   │        TO POINT SPREAD FUNCTION       │      │
  │   └──────────────────────────────────────┘      │──S23
  │                      │                           │
  │                      ▼                           │
  │   ┌──────────────────────────────────────┐      │
  │   │        CALCULATE FITTING RESIDUAL     │──S31 │
  │   └──────────────────────────────────────┘      │
  │                      │    S32                    │
  │                      ▼                           │
  │              ╱ IS RESIDUAL ╲      No             │
  │             ⟨ LESS THAN SET VALUE? ⟩─────────────┼──▶
  │              ╲             ╱                     │
  │                      │ Yes                        │
  │                      ▼                           │
  │   ┌──────────────────────────────────────┐      │
  │   │     CALCULATE CENTROID OF LUMINANCE   │──S25 │
  │   │ FROM PARAMETERS OF FUNCTION OBTAINED BY FITTING │
  │   └──────────────────────────────────────┘      │
  └─────────────────────────────────────────────────┘
                           │
                           ▼
  ┌─────────────────────────────────────────────────┐
  │ STORE SET OF LUMINANCE DISTRIBUTION AND CENTROID │──S26
  │              AS TEACHER DATA                     │
  └─────────────────────────────────────────────────┘
                           │    S27
                           ▼
              ╱ IS NEXT IMAGE OF FLUORESCENCE ╲  Yes
             ⟨          PRESENT?              ⟩──────▶
              ╲                              ╱
                           │ No
                           ▼
                        ( END )
```

FIG. 13

FIG. 14

```
                        ( START )
                            │
                            ▼
        ┌───────────────────────────────────────┐
        │          SPECIFY CENTROID             │──S41
        └───────────────────────────────────────┘
                            │
                            ▼
        ┌───────────────────────────────────────┐
        │   SET PARAMETERS OF POINT SPREAD FUNCTION │──S42
        └───────────────────────────────────────┘
                            │
                            ▼
    ┌─────────────────────────────────────────────────┐
    │ CALCULATE LUMINANCE DISTRIBUTION USING POINT SPREAD FUNCTION │──S43
    │        WITH RESPECT TO SPECIFIED CENTROID        │
    └─────────────────────────────────────────────────┘
                            │
                            ▼
    ┌─────────────────────────────────────────────────┐
    │ STORE SET OF LUMINANCE DISTRIBUTION AND CENTROID AS TEACHER DATA │──S44
    └─────────────────────────────────────────────────┘
                            │
                            ▼
                        ( END )
```

FIG. 15

FIG. 16

```
                    ┌─────────┐
                    │  START  │
                    └─────────┘
                         │
    ┌────────────────────────────────────────────────┐
    │              SPECIFY CENTROID                   │──S41
    └────────────────────────────────────────────────┘
                         │
    ┌────────────────────────────────────────────────┐
    │      SET PARAMETERS OF POINT SPREAD FUNCTION    │──S42
    └────────────────────────────────────────────────┘
                         │
    ┌────────────────────────────────────────────────┐
    │ CALCULATE FIRST LUMINANCE DISTRIBUTION USING    │
    │ POINT SPREAD FUNCTION                           │──S45
    │ WITH RESPECT TO SPECIFIED CENTROID              │
    └────────────────────────────────────────────────┘
                         │
    ┌────────────────────────────────────────────────┐
    │      ACQUIRE SECOND LUMINANCE DISTRIBUTION      │
    │    DIFFERENT FROM FIRST LUMINANCE DISTRIBUTION  │──S46
    └────────────────────────────────────────────────┘
                         │
    ┌────────────────────────────────────────────────┐
    │          GENERATE LUMINANCE DISTRIBUTION        │
    │     THAT COMBINES FIRST LUMINANCE DISTRIBUTION  │──S47
    │        AND SECOND LUMINANCE DISTRIBUTION        │
    └────────────────────────────────────────────────┘
                         │
    ┌────────────────────────────────────────────────┐
    │ STORE SET OF LUMINANCE DISTRIBUTION AND         │──S48
    │ CENTROID AS TEACHER DATA                        │
    └────────────────────────────────────────────────┘
                         │
                    ┌─────────┐
                    │   END   │
                    └─────────┘
```

FIG. 17

Data of first image

Sample data

Calculation model
data

**INTERNATIONAL SEARCH REPORT**

International application No.

PCT/JP2017/044021

A.  CLASSIFICATION OF SUBJECT MATTER
Int.Cl. G06T7/00(2017.01)i, G01N21/64(2006.01)i, G02B21/36(2006.01)i,
G06T7/66(2017.01)i

According to International Patent Classification (IPC) or to both national classification and IPC

B.  FIELDS SEARCHED

Minimum documentation searched (classification system followed by classification symbols)
Int.Cl. G06T7/00, G01N21/64, G02B21/36, G06T7/66

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 05-038334 A (FUJI PHOTO FILM CO., LTD.) 19 February 1993, paragraphs [0014]-[0022], [0033]-[0049], fig. 6-7 (Family: none) | 1, 13-14<br>2-3, 9, 11<br>4-8, 10, 12 |
| Y | JP 2016-110232 A (NTT COMWARE CORP) 20 June 2016, paragraph [0036] (Family: none) | 2-3, 9, 11 |

☒  Further documents are listed in the continuation of Box C.　　　☐  See patent family annex.

| | |
|---|---|
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| | |

| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2017/044021 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | 石田皓之, 外 4 名, 携帯カメラ入力型文字認識におけるぼけやぶれに対処するための生成型学習法, 電子情報通信学会論文誌, 01 September 2006, 第 J89-D 巻第 9 号, 第 2055 頁一第 2064 頁, ISSN 1880-4535 (ISHIDA, Hiroyuki et al. A Generative Learning Method for the Recognition of Blurred Characters Taken by Portable Cameras. The IEICE Transactions on Information and Systems, 01 September 2006, J89-D (9), pp. 2055-2064, ISSN 1880-4535) | 3, 9, 11 |
| Y | JP 2010-500563 A (PRESIDENT AND FELLOWS OF HARVARD COLLEGE) 07 January 2010, paragraph [0004] & US 2008/0032414 A1, paragraph [0004] & EP 2378343 A2 | 11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080032414
- JP 2016248127 A